# EUROPEAN PATENT APPLICATION

(11) **EP 1 803 687 A1**
(43) Date of publication of application: **04.07.2007**
(21) Application number: 05768874.9
(22) Date of filing: 08.08.2005
(51) Int. Cl.: C02F 1/461

(54) **PERFORMANCE MAINTAINING METHOD IN ELECTROLYSIS FUNCTIONAL WATER PRODUCING DEVICE**

(30) Priority: 11.08.2004 JP 2004234529; 28.12.2004 JP 2004381372
(71) Applicant: MIZ Co., Ltd., Fujisawa-shi Kanagawa 251-087 (JP)
(72) Inventor: ARAI, Kazuyoshi, Miz Co., Ltd., Fujisawa-shi, Kanagawa 2510871 (JP); MIYAMAE, Kazuhiro, Miz Co., Ltd., Fujisawa-shi, Kanagawa 2510871 (JP)
(74) Representative: Wiebusch, Manfred
(86) International application number: PCT/JP2005/014538
(87) International publication number: WO 2006/016564

(57) **Abstract**

A performance maintaining method for an electrolyzed functional water generating apparatus capable of maintaining a state allowing steady generation of high-performance electrolyzed functional water is provided. A cation-exchange membrane provided in contact with an anode between a cathode and the anode regenerates a membrane by desorbing cations adsorbed to the cation-exchange membrane while to-be-electrolyzed raw water is subjected to electrolysis with a positive polarity in a state where an electrolytic chamber is supplied with to-be-electrolyzed raw water in the electrolyzed functional water generating apparatus having an electrolytic cell with a special structure that allows intake of the entire amount of water as cathode water.

## Description

### BACKGROUND OF THE INVENTION

### Field of the Invention

The present invention relates to an electrolyzed functional water generating apparatus configured to provide functionality to water by electrolyzing to-be-electrolyzed raw water. More specifically, it relates to a performance maintaining method for the electrolyzed functional water generating apparatus capable of maintaining a state allowing steady generation of high-performance electrolyzed functional water.

### Related Background Art

Electrolyzed functional water is water that has acquired a useful function with reproducibility through an electrochemical reaction occurring by causing an electrical current to flow to an electrolytic aqueous solution. The electrolyzed functional water generating apparatus is an apparatus designed for the purpose of generating the electrolyzed functional water.

An exemplary prior art electrolyzed functional water generating apparatus is disclosed in Patent Document 1 proposed by the applicants of the present invention, comprising: an electrolytic chamber to which to-be-electrolyzed raw water is supplied; at least one separating membrane which separates the inside of the electrolytic chamber from the outside thereof a pair of electrode plates provided inside and outside the electrolytic chamber sandwiching the separating membrane therebetween; an electrolytic cell in which the electrode plate outside the electrolytic chamber is provided in contact with the separating membrane or leaving a slight space; and a power source that supplies an electrolyzing voltage to the electrolytic cell. Moreover, technique for conducting electrolysis of the to-be-electrolyzed raw water by applying a voltage from the power source between the electrode plate provided as the cathode inside the electrolytic chamber and electrode plate provided as the anode outside the electrolytic chamber using an electrolyte film such as a cation-exchange membrane or an anion-exchange membrane as the separating membrane is disclosed.

Furthermore, Patent Document 2 discloses an electrolyzed hydrogen-dissolved water generating apparatus constituted by: an electrolytic cell, which includes a cathode and an anode deployed facing each other, an electrolytic film arranged in contact with the anode between the cathode and the anode, and a cathode chamber in which the cathode is deployed; a raw water path, which directly connects to the cathode chamber to continuously pass raw water thereto; and an electrolyzed water discharge channel, which directly connects to the cathode chamber to drain from the electrolytic cell electrolyzed hydrogen-dissolved water, which dissolves hydrogen generated on the cathode surface.

However, the electrolyzed functional water generating apparatus described in Patent Documents 1 and 2, which has the separating membrane provided in contact with the anode between the cathode and the anode and the electrolytic cell with a special structure that allows intake of the entire amount of water as cathode water, has a deep-seated problem that the serviceability of the apparatus is inhibited due to separating membrane characteristics in the case of employing an electrolytic film, particularly a cation-exchange membrane as the separating membrane and also employing water containing hardness components (e.g., calcium ions or magnesium ions) such as tap water or mineral water.

More specifically, by exposing the cation-exchange membrane to the water containing hardness components, it can have a property of selectively adsorbing cations in the water as with cation-exchange resin. When the cation-exchange membrane having said property is employed as the separating membrane of the special structured electrolytic cell as described in Patent Documents 1 and 2, the cation-exchange membrane is always in contact with the to-be-electrolyzed raw water existing in the electrolytic cell, thereby adsorbing the cations from the hardness components within the to-be-electrolyzed raw water. This brings about a deep-seated problem that steady generation of high-performance electrolyzed functional water may be no longer possible. The present invention employs the concentration of hydrogen dissolved into the electrolyzed functional water as an indicator for measuring properties thereof. According to this indicator, high-performance electrolyzed functional water is water in which highly concentrated electrolyzed hydrogen is dissolved such as electrolyzed hydrogen-saturated water (including electrolyzed hydrogen supersaturated water) in which hydrogen generated through electrolysis of water is dissolved to a degree exceeding the saturated concentration.
[Patent Document 1] Patent Gazette No. 3349710
[Patent Document 2] Japanese Patent Application Laid-open No. 2003-245669

### SUMMARY OF THE INVENTION

The present invention has been made for solving the above problem and has an object to provide a performance maintaining method for an electrolyzed functional water generating apparatus capable of maintaining a state allowing steady generation of high-performance electrolyzed functional water.

In order to solve the above-given problem, a performance maintaining method for an electrolyzed functional water generating apparatus according to the invention set forth in claim 1, which comprises an electrolytic chamber to which to-be-electrolyzed raw water is supplied, at least one separating membrane which separates the inside of the electrolytic chamber from the outside thereof at least a pair of electrode plates provided inside and outside the electrolytic chamber sandwiching the separating membrane, an electrolytic cell in which the electrode plate outside the electrolytic chamber is provided in contact with the separating membrane, and a DC power source that supplies a DC voltage between electrodes in the electrolytic cell; said method is characterized by employing a cation-exchange membrane as the separating membrane and comprising: regenerating a membrane by applying a DC voltage from the DC power source between a cathode or an electrode plate provided inside the electrolytic chamber and an anode or an electrode plate outside the electrolytic chamber in a forward direction in a state where the electrolytic chamber is supplied with to-be-electrolyzed raw water; wherein cations such as calcium ions or magnesium ions adsorbed into the cation-exchange membrane are desorbed while the to-be-electrolyzed raw water is subjected to electrolysis in the forward direction so as to regenerate the membrane.

The invention set forth in claim 1 is made to resolve a new problem that steady generation of high-performance electrolyzed functional water may be impossible when trying to generate the electrolyzed functional water under the condition of cations adsorbed into the cation-exchange membrane in the electrolytic cell according to the present invention, by desorbing the cations adsorbed into the cation-exchange membrane in a state where the electrolytic chamber is supplied with to-be-electrolyzed raw water while subjecting the to-be-electrolyzed raw water to electrolysis with a positive polarity so as to regenerate the membrane.

The principle of such membrane regeneration through electrolysis is described forthwith. When to-be-electrolyzed raw water is subjected to electrolysis with a positive polarity, an electrochemical reaction represented by the reaction formula:

4H₂O+4e⁻→2H₂↑4OH⁻

occurs on the surface of the anode provided in the electrolytic chamber, generating hydroxide and hydrogen ions. Meanwhile, an electrochemical reaction represented by the reaction formula:

2H₂O→O₂↑4H⁺+4e⁻

occurs on the surface of the anode provided in contact with the cation-exchange membrane, or more specifically, between the anode and the cation-exchange membrane, generating hydroxide and hydrogen ions.

Due to the abundant hydrogen ions generated on the anode surface in this manner, cations such as calcium ions or magnesium ions adsorbed into the cation-exchange membrane are substituted with the hydrogen ions and thus broken away from the cation-exchange membrane, resulting in acceleration of regeneration of the membrane.

According to the invention set forth in claim 1, subjecting to-be-electrolyzed raw water to electrolysis with a positive polarity in a state where the to-be-electrolyzed raw water is supplied to the electrolytic chamber allows desorption of the cations to regenerate the cation-exchange membrane, resulting in elimination of the contributing factor preventing to steadily generate high-performance electrolyzed functional water. Therefore, the electrolyzed functional water generating apparatus can maintain a state allowing steady generation of high-performance electrolyzed functional water.

With the invention set forth in claim 1, an idea including general membrane regenerating technology through electrolysis, which desorbs cations adsorbed into the cation-exchange membrane while subjecting the to-be-electrolyzed raw water to electrolysis with a positive polarity in a state where the electrolytic chamber is supplied with to-be-electrolyzed raw water so as to regenerate the membrane, is provided. However, can the cation-exchange membrane be regenerated as long as the to-be-electrolyzed raw water is subjected to electrolysis? As a result of the inventers devoted research regarding this question, it is found that simply applying a DC voltage from the DC power source in a forward direction is insufficient to desorb the cations adsorbed into the cation-exchange membrane and that there is a necessity to satisfy a certain requirement in order to accomplish the end desire, thereby completing the invention set forth in claim 2.

In other words, the invention set forth in claim 2 is characterized by setting a current density of the anode to a value exceeding a critical current density or the lower limit in order to desorb cations adsorbed into the cation-exchange membrane when a DC voltage from the direct current source is applied in the forward direction between both electrodes.

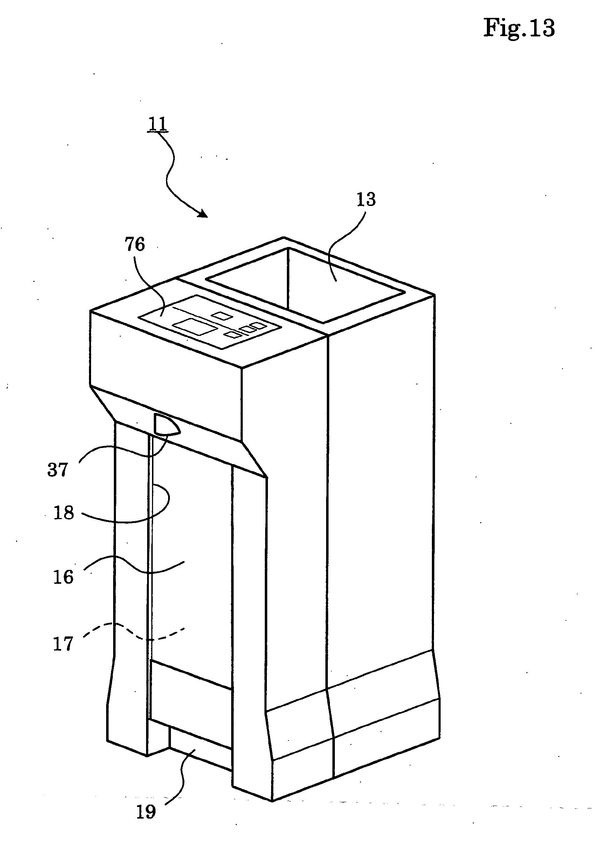

According to the invention set forth in claim 2, since the current density of the anode is set to a value exceeding a critical current density-or the lower limit that allows desorbing of the cations adsorbed into the cation-exchange membrane as an electrolysis requirement necessary for cation-exchange membrane regeneration through electrolysis, cation-exchange membrane regeneration through electrolysis can be assuredly conducted. Note that critical current density has close relationships with the state of the membrane itself including an absolute amount of cation adsorption to the cation-exchange membrane and type and ratio of the adsorbed cations, and the environmental condition of the surrounding in which the cation-exchange membrane is deployed including hardness of the to-be-electrolyzed raw water in which the cation-exchange membrane is immersed, type and ratio of both anions and cations dissolved in that water, and the pH of that water. In other words, when, for example, the absolute amount of cation adsorption to the membrane and rise and fall of the hardness of the to-be-electrolyzed raw water in which the cation-exchange membrane is immersed change, critical current density changes responding thereto. More specifically, as shown in FIGS. 13 through 16, for example, it is also experimentally demonstrated that critical current density tends to be a low value in the case where the to-be-electrolyzed raw water in which the cation-exchange membrane is immersed is soft water, while it tends to be a high value in the case where the membrane-immersing water is hard water.

With the invention set forth in claim 2, an electrolysis requirement necessary for surely implementing cation-exchange membrane regeneration through electrolysis is specified. Now that a guideline for cation-exchange membrane regeneration through electrolysis is established, it is imperative from a practical standpoint to grasp at some point to what extent are cations adsorbed into the cation-exchange membrane because it will be useful for providing a performance guarantee for the resulting electrolyzed functional water in view of the fact that there is correlation between the adsorption rate of cations to the membrane and performance of the electrolyzed functional water.

In light of this, the invention set forth in claim 3 is characterized by grasping a regeneration level of the cation-exchange membrane based on changes in PH over time of electrolyzed functional water resulting from subjecting the to-be-electrolyzed raw water to the electrolysis with a positive polarity.

With the invention set forth in claim 3, when observation of changes in PH of electrolyzed functional water resulting from subjecting the to-be-electrolyzed raw water to the electrolysis with a positive polarity has found no changes in PH over time (the pH is nearly constant and does not fluctuate), which means that the regenerating level of the cation-exchange membrane approaches a state of equilibrium (ideal state), the regenerating level of the cation-exchange membrane is then grasped based on changes in PH of electrolyzed functional water resulting from subjecting the to-be-electrolyzed raw water to the electrolysis with a positive polarity over time. Here, the regenerating level of the cation-exchange membrane denotes a relative regenerating level with an ideal regenerating level of the cation-exchange membrane as a standard at the point where the aforementioned mutual relationship between the state of the cation-exchange membrane itself and the surrounding environmental condition in which the cation-exchange membrane is deployed reaches a state of equilibrium. Furthermore, an ideal regenerating level of the cation-exchange membrane at the point where the above-given mutual relationship reaches a state of equilibrium denotes a state allowing a predetermined amount of cations to be stored in the cation-exchange membrane without more than the predetermined amount of cations continuing to be adsorbed and also allowing hydrogen ions generating in the anode to permeate and continue being supplied to the electrolytic chamber.

According to the invention set forth in claim 3, the regenerating level of the cation-exchange membrane is grasped based on changes in PH of electrolyzed functional water resulting from subjecting the to-be-electrolyzed raw water to the electrolysis with a positive polarity over time. Therefore, provision of, for example, a pH sensor in the electrolyzed functional water generating apparatus and then detection of changes in PH over time while the to-be-electrolyzed raw water is subjected to the electrolysis with a positive polarity allow finding of the regenerating level of the cation-exchange membrane as well as the performance of the resulting electrolyzed functional water. Note that the present invention may be configured to terminate continuance of the membrane regenerating process assuming that regeneration of the membrane is complete when the grasped regenerating level of the cation-exchange membrane has reached a predetermined level. This allows optimization of the duration of the membrane regenerating process.

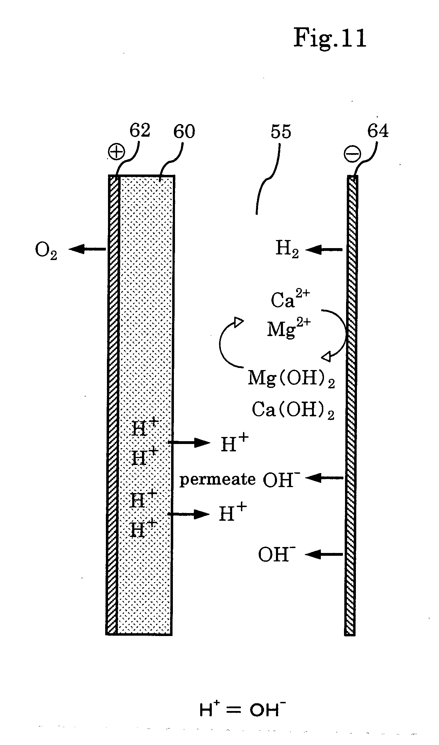

With the invention set forth in claim 3, necessary technical specifications for grasping the relative regenerating level of the cation-exchange membrane is provided. After a method for grasping the relative regenerating level of the cation-exchange membrane is established, clarifying how to resolve the scale adhesion problem of the cathode inevitably occurring during water electrolysis (i.e., problem that calcium hydroxide or magnesium hydroxide solidifying and accumulating on the surface of the cathode causes deterioration of the electrolysis efficiency and the like; see FIG. 11) and the disinfection and rinsing problem of the water flow path in the apparatus becomes an extremely important factor for increasing the practical value of the present invention. Furthermore, as described later, the cation-exchange membrane employed with the present invention has properties that sufficiently demonstrate the functionality thereof in an aqueous state. However, it loses that functionality when exposed in a dry state, causing extreme deterioration of the electrolysis efficiency. When in such a situation, demonstrating how to recover functions of the apparatus becomes an extremely important factor for increasing the practical value of the present invention.

In view of this, the invention set forth in claim 4 is characterized by further comprising a reverse descaling process of applying a DC voltage with a reverse polarity from the DC power source between the cathode or the electrode plate provided inside the electrolytic chamber and the anode or the electrode plate outside the electrolytic chamber in a state where to-be-electrolyzed raw water is supplied to the electrolytic chamber.

According to the invention set forth in claim 4, since a reverse descaling process is provided, the scale adhesion problem of the cathode and the disinfection and rinsing problem of the water flow path in the apparatus can be resolved at once. Furthermore, when in the situation where the cation-exchange membrane is exposed in a dry state, speedy recovery of the functions of the apparatus may be implemented by carrying out the reverse descaling process, thereby leading to excellent practical advantages.

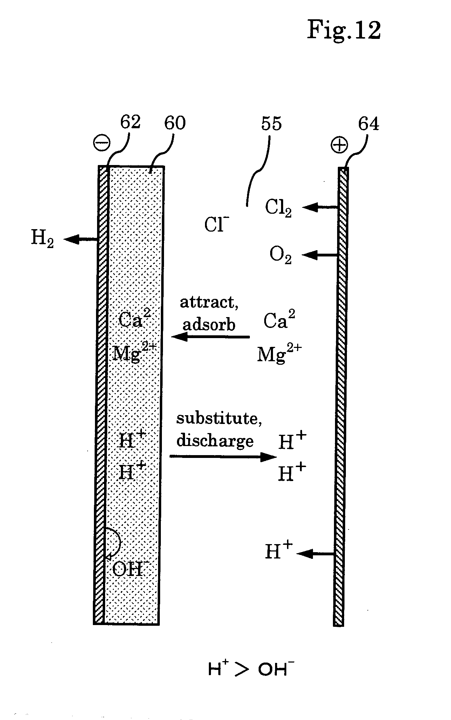

According to the invention set forth in claim 4, providing a reverse descaling process is specified in order to resolve all at once the scale adhesion problem of the cathode and the disinfection and rinsing problem of the water flow path in the apparatus and the problem of losing functionality of the apparatus due to drying of the cation-exchange membrane. However, when the reverse descaling process is carried out, the polarity of the electrode plate provided outside the electrolytic chamber becomes negative, the cations existing within the to-be-electrolyzed raw water in the electrolytic chamber are influenced to be attracted to the cation-exchange membrane, and as a result of the cation-exchange membrane adsorbing a large amount of cations (see FIG. 12), membrane regeneration becomes imperative.

In view of this, the invention set forth in claim 4 is characterized by the membrane regenerating process carried out after the reverse descaling process.

According to the invention set forth in claim 5, even if a large amount of cations adsorb into the cation-exchange membrane due to carrying out the reverse descaling process, the membrane regenerating process is carried out after the reverse descaling process, and thus the end desire may be achieved by eliminating adverse affects from carrying out the reverse descaling process.

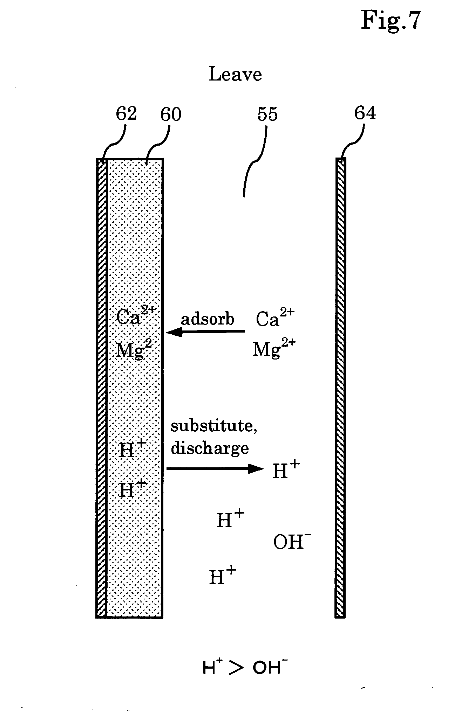

Incidentally, even if the cations adsorbed to the cation-exchange membrane are nearly all desorbed due to carrying out the membrane regenerating process, when the apparatus is left as is in an electrolysis off state, adsorption to the membrane of the cations such as calcium ions or magnesium ions existing within the residual water in the electrolytic chamber gradually progresses at the same time as substitution and discharge of the hydrogen ions after the point when the membrane reproducing process is completed as a borderline, as shown in the simplified explanatory diagram focusing on behaviors of the materials in the electrolytic chamber of FIG. 7. This may emanate from the fact that in the case where a cation-exchange membrane such as a perfluorinated sulfonic acid membrane is immersed in an aqueous solution containing a plurality of cation components differing in type, the cation components are preferentially desorbed to the membrane in the order of calcium ions, magnesium ions, potassium ions, sodium ions, and hydrogen ions. At this time, focusing on the characteristics of the residual water in the electrolytic chamber, the hardness thereof decreases and the pH thereof becomes more acidic. The adsorption progression rate of the cations into the membrane gradually slows down as the mutual relationship based on parameters such as hardness of the residual water in the electrolytic chamber, adsorption rate of cations into the membrane, and pH of the residual water approaches a state of equilibrium; and at the point when the state of equilibrium is reached, the progression of adsorption may stop. Given this, when initiating generation of electrolyzed functional water, adsorption of cations into the membrane has progressed until the membrane regenerating process is required. In this case, if obtaining high-performance electrolyzed functional water is first priority, the generating process for the electrolyzed functional water is inevitably carried out after the membrane regenerating process is carried out. This prevents immediate provision of high-performance electrolyzed functional water. Such a situation will occur quite frequently with the electrolyzed functional water generating apparatus designed to be distributed in homes, for example.

In view of this, the invention set forth in claim 6 is characterized by the membrane regenerating process intermittently carried out.

According to the invention set forth in claim 6, since the membrane generating process is carried out intermittently, for example, and an automatic membrane regenerating process is carried out for five minutes every twelve hours or for twenty-five minutes every thirty minutes even in a case where the apparatus is not used for a relatively long period such as three days, regularly maintaining performance of the electrolyzed functional water generating apparatus at a high level is possible. Therefore, In the case of applying the performance maintaining method according to the present invention to the electrolyzed functional water generating apparatus for domestic use, high-performance electrolyzed functional water can be provided immediately as needed. This allows provision of an apparatus with high customer satisfaction.

Furthermore, the invention set forth in claim 7 is characterized in that soft water is used as the to-be-electrolyzed raw water supplied to the electrolytic chamber when regenerating the cation-exchange membrane while subjecting the to-be-electrolyzed raw water to the electrolysis with a positive polarity.

Moreover, the invention set forth in claim 8 is characterized in that deionized water is used as the to-be-electrolyzed raw water supplied to the electrolytic chamber when regenerating the cation-exchange membrane while subjecting the to-be-electrolyzed raw water to the electrolysis with a positive polarity.

Moreover, the invention set forth in claim 9 is characterized in that the to-be-electrolyzed raw water supplied to the electrolytic chamber is replaced when regenerating the cation-exchange membrane while subjecting the to-be-electrolyzed raw water to the electrolysis with a positive polarity.

Furthermore, the invention set forth in claim 10 is characterized in that the to-be-electrolyzed raw water supplied to the electrolytic chamber is replaced by circulating the to-be-electrolyzed raw water.

### Effects of the Invention

According to the invention set forth in claim 1, subjecting to-be-electrolyzed raw water to electrolysis with a positive polarity in a state where the to-be-electrolyzed raw water is supplied to the electrolytic chamber allows desorption of the cations to regenerate the cation-exchange membrane, resulting in elimination of the contributing factor preventing to steadily generate high-performance electrolyzed functional water. Therefore, the electrolyzed functional water generating apparatus can maintain a state allowing steady generation of high-performance electrolyzed functional water.

According to the invention set forth in claim 2, since the current density of the anode is set to a value exceeding a critical current density or the lower limit that allows desorbing of the cations adsorbed into the cation-exchange membrane as an electrolysis requirement necessary for cation-exchange membrane regeneration through electrolysis, cation-exchange membrane regeneration through electrolysis can be assuredly conducted.

According to the invention set forth in claim 3, the regenerating level of the cation-exchange membrane is grasped based on changes in PH of electrolyzed functional water resulting from subjecting the to-be-electrolyzed raw water to the electrolysis with a positive polarity over time. Therefore, provision of, for example, a pH sensor in the electrolyzed functional water generating apparatus and then detection of changes in PH over time while the to-be-electrolyzed raw water is subjected to the electrolysis with a positive polarity allow finding of the regenerating level of the cation-exchange membrane as well as the performance of the resulting electrolyzed functional water.

According to the invention set forth in claim 4, since a reverse descaling process is provided, the scale adhesion problem of the cathode and the disinfection and rinsing problem of the water flow path in the apparatus can be resolved at once. Furthermore, when in the situation where the cation-exchange membrane is exposed in a dry state, speedy recovery of the functions of the apparatus may be implemented by carrying out the reverse descaling process, thereby leading to excellent practical advantages.

According to the invention set forth in claim 5, even if a large amount of cations adsorb into the cation-exchange membrane due to carrying out the reverse descaling process, the membrane regenerating process is carried out after the reverse descaling process, and thus the end desire may be achieved by eliminating adverse affects from carrying out the reverse descaling process.

According to the invention set forth in claim 6, since the membrane generating process is carried out intermittently, and an automatic membrane regenerating process is carried out for five minutes every twelve hours or for twenty-five minutes every thirty minutes even in a case where the apparatus is not used for a relatively long period such as three days, regularly maintaining performance of the electrolyzed functional water generating apparatus at a high level is possible. Therefore, in the case of applying the performance maintaining method according to the present invention to the electrolyzed functional water generating apparatus for domestic use, high-performance electrolyzed functional water can be provided immediately as needed. This allows provision of an apparatus with high customer satisfaction.

According to the invention set forth in claims 7 and 8, when regenerating the cation-exchange membrane while subjecting the to-be-electrolyzed raw water to electrolysis with a positive polarity, soft water, more preferably deionized water is used as the to-be-electrolyzed raw water supplied to the electrolytic chamber, thereby improving membrane regeneration efficiency.

According to the invention set forth in claim 9, when regenerating the cation-exchange membrane while subjecting the to-be-electrolyzed raw water to electrolysis with a positive polarity, the to-be-electrolyzed raw water supplied to the electrolytic chamber is replaced. Therefore, even if the cations within the water in the electrolytic chamber start to desorb from the cation-exchange membrane, membrane regeneration efficiency may be improved as a result of keeping the cation concentration in the electrolytic chamber high.

According to the invention set forth in claim 10, since the to-be-electrolyzed raw water supplied to the electrolytic chamber is replaced by circulating the to-be-electrolyzed raw water, as a result of being able to regenerate the membrane while keeping the amount of regenerating water to be used small, it may actively be utilized as a water resource.

### BRIEF DESCRIPTION OF THE DRAWINGS

FIG. 1 is a schematic block diagram showing working parts of an electrolyzed functional water generating apparatus;
FIG. 2 is a front view of an electrolytic cell deployed in the electrolyzed functional water generating apparatus;
FIG. 3 is an A-A cross-sectional view of the electrolytic cell shown in FIG. 2;
FIG. 4 is a block diagram showing an electrical system of the electrolyzed functional water generating apparatus;
FIG. 5 is a diagram showing the flow of water in a generating process;
FIG. 6 is a diagram showing the flow of water in a regenerating process and a rinsing process;
FIG. 7 is a simplified explanatory drawing focused on physical behavior in an electrolytic chamber;
FIG. 8 is a simplified explanatory drawing focused on physical behavior in the electrolytic chamber;
FIG. 9 is a simplified explanatory drawing focused on physical behavior in the electrolytic chamber;
FIG. 10 is a simplified explanatory drawing focused on physical behavior in the electrolytic chamber;
FIG. 11 is a simplified explanatory drawing focused on physical behavior in the electrolytic chamber;
FIG. 12 is a simplified explanatory drawing focused on the physical behavior in the electrolytic chamber;
FIG. 13 is an external perspective view of an electrolyzed functional water generating apparatus according to the present invention;
FIG. 14 is a diagram showing an operation panel of the electrolyzed functional water generating apparatus according to the present invention;
FIG. 15 is a flowchart showing a main routine of a control unit mounted on the electrolyzed functional water generating apparatus according to the present invention;
FIG. 16 is a flowchart showing a subroutine for generation activate processing; FIG. 17 is a flowchart showing a subroutine for generation activate processing;
FIG. 18 is a flowchart showing a subroutine for rinse activate processing;
FIG. 19 is a flowchart showing a subroutine for operate processing (including generating processing);
FIG. 20 is a flowchart showing a subroutine for regenerating processing;
FIG. 21 is a flowchart showing a subroutine for rinsing;
FIG. 22 is a timing chart of a generating process;
FIG. 23 is a timing chart of a regenerating process;
FIG. 24 is a timing chart of a rinsing process;
FIG. 25 is a diagram describing how to exhibit performance of electrolyzed functional water due to electrolytic cell pressure dropping characteristics;
FIG. 26 is a diagram describing how critical current density changes according to changes in hardness of test water;
FIG. 27 is a diagram describing how critical current density changes according to changes in hardness of test water;
FIG. 28 is a diagram describing how critical current density changes according to changes in hardness of test water; and
FIG. 29 is a diagram showing a demonstration of suitable critical current densities.

### DESCRIPTION OF THE PREFERRED EMBODIMENTS

Below, an embodiment of the present invention is described in detail based on the appended drawings.

### (System Structure)

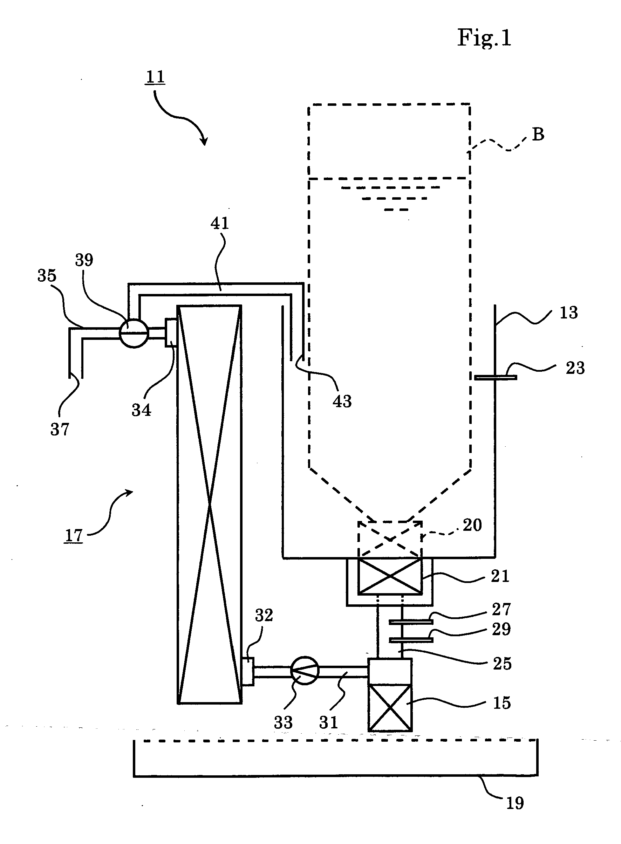

First, a structure of an electrolyzed functional water generating apparatus for domestic use according to the present invention is described while referencing examples of FIGS. 1 through 4, 13 and 14.

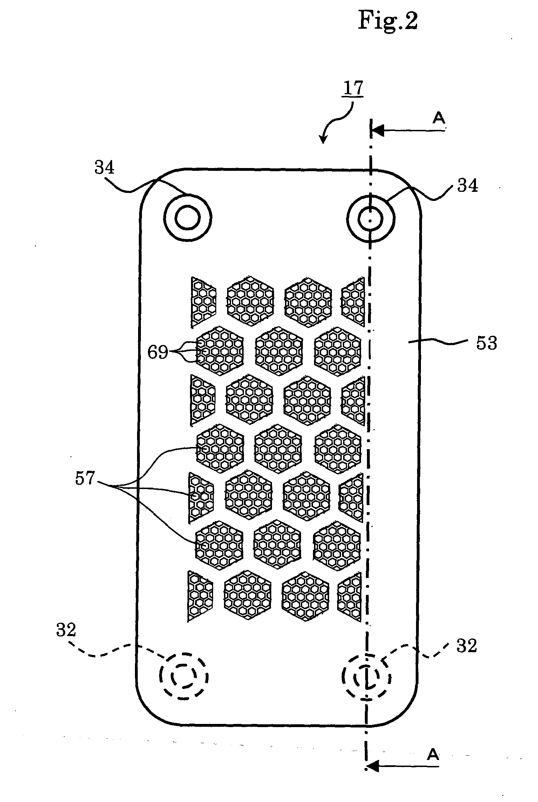

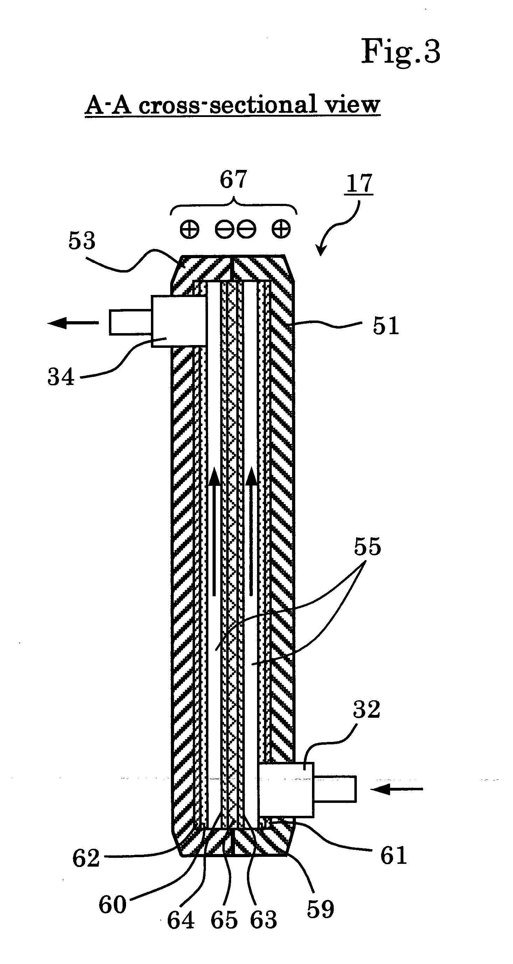

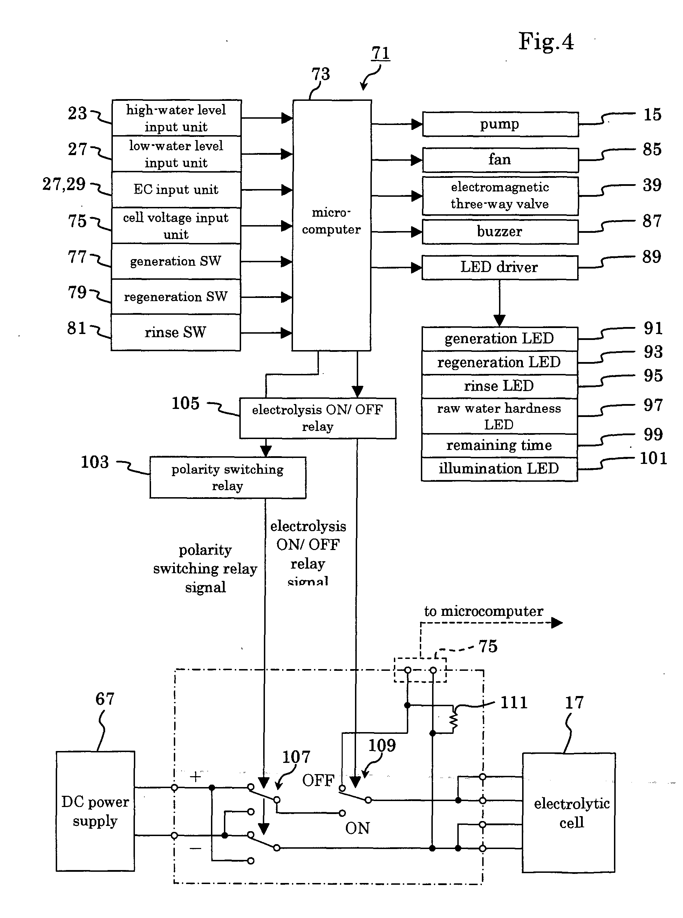

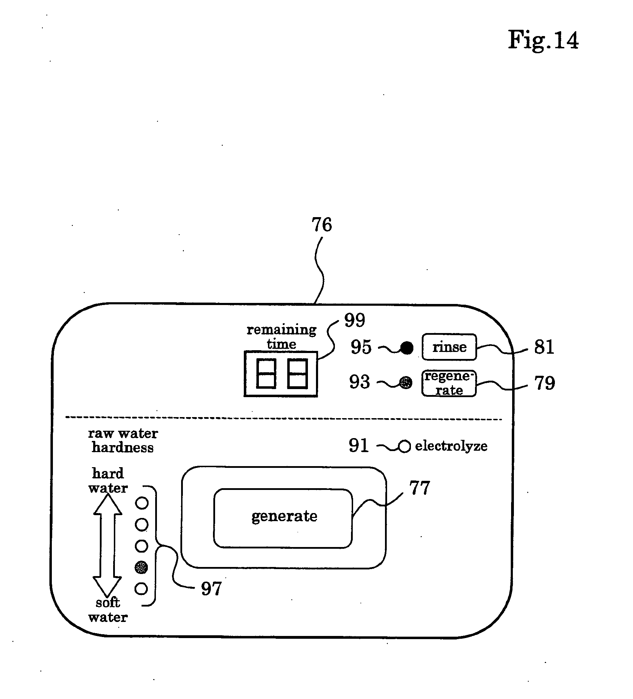

FIG. 1 is a schematic block diagram showing working parts of an electrolyzed functional water generating apparatus. FIG. 2 is a front view of an electrolytic cell in the electrolyzed functional water generating apparatus. FIG. 3 is an A-A cross-sectional view of the electrolytic cell shown in FIG. 2. FIG. 4 is a block diagram showing an electrical system of the electrolyzed functional water generating apparatus. FIG. 13 is an external perspective view of the electrolyzed functional water generating apparatus. FIG. 14 is a diagram showing an operation panel of the electrolyzed functional water generating apparatus.

An electrolyzed functional water generating apparatus 11 comprises a water storage tank 13, which retains to-be-electrolyzed raw water, a pump 15 for discharging to-be-electrolyzed raw water retained in the water storage tank 13 or a bottle B described later, an electrolytic cell 17, which electrolyzes the to-be-electrolyzed raw water discharged from the pump 15, and a water tray 19 provided at the bottom thereof, as shown in FIGS. 1 and 13. Note that the electrolytic cell 17 is provided at the front part of the apparatus 11 so that the front part can be seen from the outside through an oblong window 18 provided on the front of the apparatus 11. This window 18 has a built-in acrylic resin transparent plate component 16. In addition, a detachable bottle connector 21 is provided at the inner lower portion of the water storage tank 13 and connected to an attachment 20 fixed to the opening of the bottle B. Furthermore, a first pin electrode 23 (high-water level sensor) is provided at a sidewall upper portion of the water storage tank 13 for detecting that the water retained in the water storage tank 13 has reached a high-water level.

The water storage tank 13 and the pump 15 are connected via a first water supply channel 25 and structured to supply to the pump 15 the to-be-electrolyzed raw water retained in the bottle B or the water storage tank 13 via the first water supply channel 25. A second pin electrode 27 (low-water level sensor and EC sensor) is provided midway along the first water supply channel 25 for detecting that the water retained in the water storage tank 13 has reached a low-water level, and detecting electric conductivity (EC) of the water flowing through the first water supply channel 25. Furthermore, a third pin electrode 29 (low-water level sensor and EC sensor) is provided at a predetermined interval from the second pin electrode 27 midway along the first water supply channel 25 for detecting the level of the water retained in the water storage tank 13, and detecting electric conductivity (EC) of the water flowing through the first water supply channel 25. The first pin electrode 23, the second pin electrode 27, and the third pin electrode 29 operate as a set for detecting the level of the water retained in the water storage tank 13. More specifically, that set operates to detect the water level by detecting whether or not there is conduction between the third pin electrode 29, which is used as a common reference electrode, and the first pin electrode 23 or the second pin electrode 27. In addition, the second pin electrode 27 and the third pin electrode 29 operate as a pair of pin electrodes to detect the electric conductivity (EC) of the water flowing through the first water supply channel 25. More specifically, the pair of pin electrodes operates to find the electric conductivity (EC) through measurement of the electric resistance of a solution by applying a weak alternating voltage between the pair of electrodes which are, for example, immersed in the solution.

The pump 15 and the electrolytic cell 17 are connected by a second water supply channel 31 via an inflow pipe 32 provided on the inflow side of the electrolytic cell 17, and is structured so as to supply to the electrolytic cell 17 the to-be-electrolyzed raw water discharged from the pump 15. A check valve 33 that prevents water back-flow is provided midway along the second water supply channel 31. Note that a branch not shown in the drawing is formed along the second water supply channel 31 on the electrolytic cell 17 side after the check valve 33, thereby allowing to-be-electrolyzed raw water to be supplied to the electrolytic cell 17 from the second water supply channel 31 via a pair of inflow pipes 32.

An outflow channel 35 for passing water flowing out from the electrolytic cell 17 is connected to the electrolytic cell 17 via an outflow pipe 34, which is provided on the outflow side of the electrolytic cell 17, and an outlet 37 is provided at the other end of the outflow channel 35. An electromagnetic three-way valve 39 for selectively branching the flow of water through the outflow channel 35 into either one of two routes is provided midway along the outflow channel 35. Note that a branch not shown in the drawing is formed further on the electrolytic cell 17 side than the electromagnetic three-way valve 39 along the outflow channel 35, thereby allowing to-be-electrolyzed raw water to be transmitted to the outflow channel 35 from the electrolytic cell 17 via a pair of outflow pipes 34. A circulation path 41 is connected to the electromagnetic three-way valve 39, and a circulatory water outlet 43 is provided at the other end of the circulation path 41 to let the water flow back towards the water storage tank 13. This allows water from the electrolytic cell 17 to flow back towards the water storage tank 13 via the electromagnetic three-way valve 39.

A schematic structure of the electrolytic cell 17 constituting a main part of the electrolyzed functional water generating apparatus 11 is described forthwith. As shown in FIGS. 2 and 3, the electrolytic cell 17 is constituted by a first casing 51 and a second casing 53 joined end to end sandwiching a sealing ring not shown in the drawings therebetween, and secured at the ends by joining means such as multiple bolts or nuts not shown in the drawings. The electrolytic cell 17 has the pair of inflow pipes 32 provided at the bottom of the first casing 51, and the pair of outflow pipes 34 provided at the top of the second casing 53. An electrolytic chamber 55 is formed in an internal space of the electrolytic cell 17.

The first casing 51 and the second casing 53 constituting the electrolytic cell 17 respectively have multiple hexagonal (some are trapezoidal) window holes 57 formed apart from each other across the entire central portion when viewed from the front, as shown in FIG. 2. Electrode plates on the outside of the electrolytic chamber described next are deployed so as to be seen through these window holes 57 from the outside of the electrolytic cell 17. A pair of first and second cation-exchange membranes 59 and 60 separating the inside of the electrolytic chamber 55 from the outside thereof is provided on either inner sidewall of the first casing 51 and the second casing 53. A pair of first and second electrode plates 61 and 62 is provided further outward from the electrolytic chamber than the first and second membranes 59 and 60 in a state of being in contact with (adhered to) the entirety of the first and second membranes 59 and 60. A pair of third and fourth electrode plates 63 and 64 is provided inside the electrolytic chamber 55 apart from the first and second membranes 59 and 60 at a predetermined interval further inward the electrolytic chamber than the first and second membranes 59 and 60 in order that the primary surfaces respectively face to the first and second electrode plates 61 and 62. In addition, a core frame 65 for supporting the third and fourth electrode plates 63 and 64 is provided between these electrode plates 63 and 64 in a state of being in contact with (adhered to) the entirety of the electrode plates 63 and 64. Although not shown in the drawing, note that the core frame 65 is structured so as to be rigidly coupled with the electrolytic cell 17 by having its ends sandwiched when joining the first casing 51 and the second casing 53 end to end. Furthermore, through-holes not shown in the drawing are formed at positions in the first and second electrode plates 61 and 62 and the first and second cation-exchange membranes 59 and 60 corresponding to the pair of inflow pipes 32 or the pair of outflow pipes 34, and the pair of inflow pipes 32 and the pair of outflow pipes 34 are provided passing through these through-holes to the electrolytic cell 17. This allows to-be-electrolyzed raw water to be supplied into the electrolytic chamber 55 via the pair of inflow pipes 32, and the to-be-electrolyzed raw water to be transmitted outside of the electrolytic chamber 55 via the pair of outflow pipes 34.

The first through fourth electrode plates 61, 62, 63, and 64 are connected to a direct current (DC) power source 67. Electrolytic voltage polarities of these electrode plates are summarized for each operating mode of the electrolyzed functional water generating apparatus 11 forthwith. In a generating process for generating electrolyzed functional water and a membrane regenerating process for regenerating the cation-exchange membranes 59 and 60, a DC voltage from the DC power source 67 is generally applied in a forward direction between a cathode or the electrode plates 63 and 64 provided inside the electrolytic chamber 55 and an anode or the electrode plates 61 and 62 provided outside the electrolytic chamber 55. Furthermore, in a reverse descaling process for descaling or a rinsing process for disinfecting and rinsing wetted parts in the apparatus, a DC voltage from the DC power source 67 is generally applied with a reverse polarity between an anode or the electrode plates 61 and 62 outside the electrolytic chamber 55 and a cathode or the electrode plates 63 and 64 inside the electrolytic chamber 55.

The first through fourth electrode plates 61, 62, 63, and 64 used in this embodiment are made of titanium, and a precious metal made from a combination of one or two or more selected from a group including platinum, iridium and palladium is sintered covering the entire surface. Hexagonal (some are trapezoidal) punched holes 69 are formed apart from each other across the entire central portions of the first through fourth electrode plates 61, 62, 63, and 64 when viewed from the front, as shown in FIG. 2. This allows gas (hydrogen or oxygen), which is generated on the surfaces of the electrode plates 61 and 62 provided on the outside of the electrolytic chamber 55, to escape to the backside of the membranes 59 and 60 (outside of the electrolytic chamber or into the atmosphere.) Note that the effective area of the electrode plates is 1 dm²/ plate.

Perfluorinated sulfonic acid membranes comprising a sulfonic acid group as an electrolyte group may be preferably used as the cation-exchange membranes 59 and 60 employed in this embodiment with consideration of respective contributing factors such as ion conductivity, physical strength, a gas barrier function, chemical stability, electrochemical stability, thermal stability or the like. The Nafion™ membrane (registered trademark of DuPont), the Flemion™ membrane (registered trademark of Asahi Glass Co., Ltd.), the Aciplex™ F membrane (trademark of Asahi Kasei Corporation) and the like or a copolymer membrane of perfluoro vinylether and tetrafluoro ethylene including a sulfonic acid group are available as such membranes.

While with this type of perfluorinated sulfonic acid membrane, the shape thereof is maintained due to the crystallinity of the perfluoro alkylene chain, since it has an uncross-linked structure, flexibility of the electrolyte group at the side chain is greater than that of a bridged hydrocarbon electrolytic membrane. Therefore, a strong hydrophobic main chain and a hydrophilic electrolyte group coexist in an ionized state, and the electrolyte group associates in a fluorocarbon matrix, forming ion clusters. This ion cluster structure has approximately several-nm wide spherical clusters stringed together by narrow channels at approximately 1 nm intervals.

The perfluorinated sulfonic acid membrane shows proton conductivity when protons are moving within water accumulated among the spherical clusters. In other words, proton conductivity increases as the percentage of water content in the membrane becomes high. On the other hand, proton conductivity deteriorates as the percentage of water content in the membrane becomes low. Specifically, if the membrane is kept in a dry state, deterioration of proton conductivity progresses, film resistance increases, whereby electrolysis then becomes impossible. Therefore, it is important to keep the membrane from becoming dry.

Now, inter-plate distance between the pair of electrode plates 61 and 63 or the pair of electrode plates 62 and 64 deployed respectively facing to each other sandwiching the cation-exchange membranes 59 and 60 therebetween is appropriately selected to fall within a range of 0 mm to 5.0 mm, more preferably approximately 1.2 mm to 1.5 mm. Here, an inter-plate distance of 0 mm assumes a case of using zero-gap electrodes where electrode membranes are directly formed on respective primary surfaces of the cation-exchange membranes 59 and 60, or at a distance equivalent to the thickness of the cation-exchange membranes 59 and 60. With zero-gap electrodes, an electrode film may be formed on either one of the primary surfaces of the membranes 59 and 60. Meanwhile, although the inter-plate distance between the electrode plates 63 and 64 provided in the electrolytic chamber 55 is not particularly limited, it is appropriately selected to fall within a range of 0.5 mm to 5 mm, more preferably approximately 1 mm to 1.4 mm.

Next, a schematic structure of an electrical system of the electrolyzed functional water generating apparatus for domestic use according to a performance maintaining method of the present invention is described based on FIGS. 4 and 14.

As shown in these drawings, a control apparatus 71 in the electrolyzed functional water generating apparatus 11 for domestic use comprises a microcomputer (which may be referred to as 'micon' hereafter), which controls the entire apparatus; the high-water level input unit (high-water level sensor) 23; the low-water level input unit (low-water level sensor) 27; the EC input units (EC sensors) 27 and 29; a cell voltage input unit 75, which detects and inputs residual voltage between electrodes that were a cathode and an anode until just before stopping electrolysis while electrolysis is off; a generation switch ('switch' is hereafter referred to as 'SW') 77, which is for selecting an electrolyzed functional water generating mode; a regeneration SW 79, which is for selecting a regenerating mode; and a rinse SW 81, which is for selecting a mode of disinfecting and rinsing a water flow path and a reverse descaling mode for electrode plates. The control apparatus 71 further comprises the pump 15; a fan 85, which is for cooling heat-generating parts such as the DC power source 67 constituted by a switching power source; the electromagnetic three-way valve 39; a buzzer 87, which issues a vocal caution or warning for a user; an LED driver 89, which drives various LEDs to blink; a generation LED 91, which indicates a generating standby state by illuminating at a time when water in the water storage tank 13 exceeds at least the low-water level, and indicates to the effect that generation is in progress by blinking when in the electrolyzed functional water generating mode; a regeneration LED 93, which indicates a regenerating standby state by illuminating at a time when water in the water storage tank 13 exceeds the high-water level, and indicates to the effect that regeneration is in progress by blinking when in the regenerating mode; a rinse LED 95, which indicates a rinse standby state by illuminating at a time when water in the water storage tank 13 exceeds the high-water level, and indicates to the effect that rinsing is in progress by blinking when in the rinse mode; a raw water hardness LED 97, which is constituted by multiple (e.g., 5) LEDs and indicates hardness of the to-be-electrolyzed raw water by varying the blinking rate thereof a remaining time LED 99, which counts down and displays in seven segments the remaining time until operation termination when, for example, in either the regenerating mode or the rinse mode, and indicates in an identifiable manner when an abnormal event occurs; a illumination LED 101, which displays an indication of performance of electrolyzed functional water that has just been generated; a polarity switching relay 103, which drives in conformity with a polarity switching instruction from the microprocessor 73, and then outputs a polarity switching relay signal; and an electrolysis ON/ OFF relay 105, which drives in conformity with an electrolysis ON/ OFF instruction from the microprocessor 73, and then outputs an electrolysis ON/ OFF relay signal. The control apparatus 71 further comprises a polarity reversal SW 107, which reverses voltage polarity of an electrode plate of the electrolytic cell 17 that has received the polarity switching relay signal from the polarity switching relay 103; an electrolysis ON/ OFF SW 109, which receives the electrolysis ON/ OFF relay signal from the electrolysis ON/ OFF relay 105 and then switches electrolysis ON or OFF; and a discharging resistor 111, which short circuits between electrodes that were a cathode and an anode until just before stopping electrolysis while electrolysis is off in order to discharge the residual voltage between the electrodes. Note that the generation SW 77, the rinse SW 81, the generation LED 91, the regeneration LED 93, the rinse LED 95, the raw water hardness LED 97, and the remaining time LED 99 are provided on an operation panel 76, as shown in FIG. 14. The raw water hardness LED 97 may be structured so as to, for example, illuminate a yellow LED when the total hardness falls below 30 ppm (warning that the hardness of the to-be-electrolyzed raw water is low and inappropriate), illuminate a green LED when the total hardness falls within the range of 30 to 300 ppm (inform that the hardness of the to-be-electrolyzed raw water is appropriate), and illuminate a red LED when the total hardness exceeds 300 ppm (warning that the hardness of the to-be-electrolyzed raw water is high and inappropriate). More specifically, it may indicate the hardness of the to-be-electrolyzed raw water in stages by being constituted by three green LEDs so as to illuminate one green LED when the total hardness falls within the range of 30 to 60 ppm (inform that the to-be-electrolyzed raw water is soft water), illuminate two green LEDs when the total hardness falls within the range of 60 to 120 ppm (inform that the to-be-electrolyzed raw water is medium water), and illuminate three green LEDs when the total hardness falls within the range of 120 to 300 ppm (inform that the to-be-electrolyzed raw water is hard water.) Furthermore, the illumination LED101 is constituted by, for example, six blue LEDs, which are deployed at positions for illuminating the front of the electrolytic cell 17 from the surrounding thereof. However, as described later, the illumination LED 101 is controlled to vary illuminating duration and/ or brightness based on the cell voltage falling tendency after electrolysis is turned off. Accordingly, it is structured to visually present to the user an indication of the state of the electrolytic cell 17 or performance of the electrolyzed functional water just generated.

### (System Operation- Main Routine)

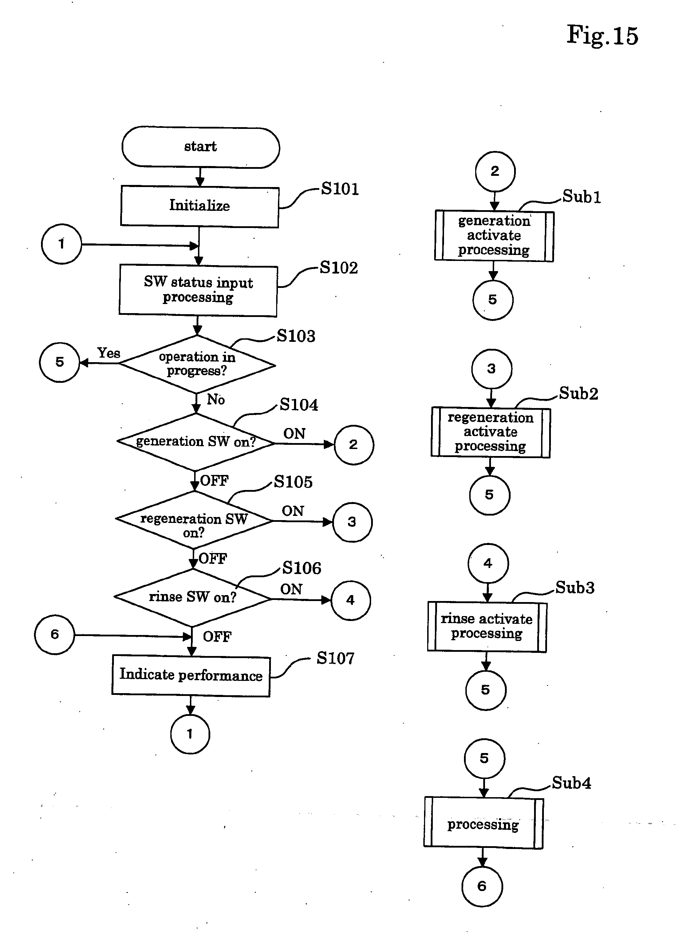

Next, operations of the electrolyzed functional water generating apparatus 11 structured as such are described based on the flowchart shown in FIG. 15.

When power is supplied to the apparatus 11, values of various flags and timers described later are initialized, whereby the apparatus 11 is ready to start up (step 101, 'step' is hereafter referred to as'S'.) After this initialization, the microprocessor 73 carries out inputting of information regarding respective SW input statuses such as whether the generation SW 77, for example, has been operated, the water level inside the water storage tank 13, the electrical conductance (EC) of the to-be-electrolyzed raw water, and the like (S102), and carries out status determination of whether or not the apparatus 11 is operating based on these various pieces of information (S103).

If the apparatus 11 is determined not to be operating as a result of the operating status determination in S103, the microprocessor 73 carries out status determination of whether or not any one of the generation SW 77, the regeneration SW 79, or the rinse SW 81 has been operated (S104, S105, and S106).

If any one of the above-given switches is determined to have been operated as a result of the switch operation input status determination in S104, S105, and S106, the microprocessor 73 carries out generation activate processing at the time that the generation SW 77 is operated (subroutine 1, 'subroutine' may hereafter be referred to as 'Sub'), regeneration activate processing at the time that the regeneration SW 79 is operated (Sub2,) and rinse activate processing at the time that the rinse SW 81 is operated (Sub3) according to the operation input statuses of the various respective switches, and then carries out processing for each mode (Sub4) after each subroutine has been executed.

If the switch operation input status determinations in S104, S105, and S106 show any one of the above-given switches has not been operated, the microprocessor 73 blinks the various LEDs based on information regarding respective SW operation input statuses input in S102, the water level of inside the water storage tank 13, and the electrical conductance (EC) of the to-be-electrolyzed raw water and the like (S107). Afterwards, processing returns to S102, repeating the main routine of S102 through S107 given forthwith.

On the other hand, if the operating status determination in S103 shows that the apparatus 11 is operating, the microprocessor 73 continues to carry out appropriate processing (Sub4). After execution of this subroutine, processing proceeds to indicate processing (S107) of the main routine, repeating the main routine of S102 through S107 given forthwith.

### (System Operation -Sub1- Generation Activate Processing)

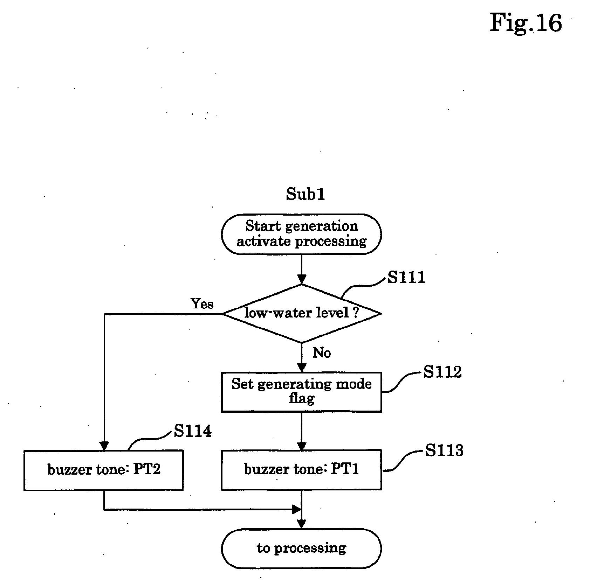

Next, generation activate processing of the Sub1 is described based on the flowchart shown in FIG. 16.

Upon start of generation activate processing, the microprocessor 73 carries out low-water level determination of whether or not the water level in the water storage tank 13 has exceeded a low-water level (S111). The purpose of low-water level determination is to confirm whether or not a prerequisite of the amount of to-be-electrolyzed raw water at least exceeding the low-water level is satisfied under consideration that accomplishing the end desire of generating electrolyzed functional water is impossible unless that amount of to-be-electrolyzed raw water exists.

If the low-water level determination in S111 shows that the water level has exceeded the low-water level, the microprocessor 73 sets a generating mode flag indicating that the operating mode of the apparatus 11 is in generating mode (S122), makes the buzzer 87 sound a tone pattern 1 (PT1: 'pi', for example (sound a single short tone)) to notify the user to the effect that the operating mode has been changed to the generating mode (S 113), and then jumps to processing of the Sub4.

On the other hand, if the low-water level determination in S111 shows that the water level has not exceeded the low-water level, the microprocessor 73 makes the buzzer 87 sound a tone pattern 2 (PT2: 'pi pi pi', for example (intermittently sound three consecutive short tones)) to notify the user to the effect that the operating mode has not been changed to the generating mode (S113), and then jumps to processing of the Sub4.

### (System Operation -Sub2- Regeneration Activate Processing)

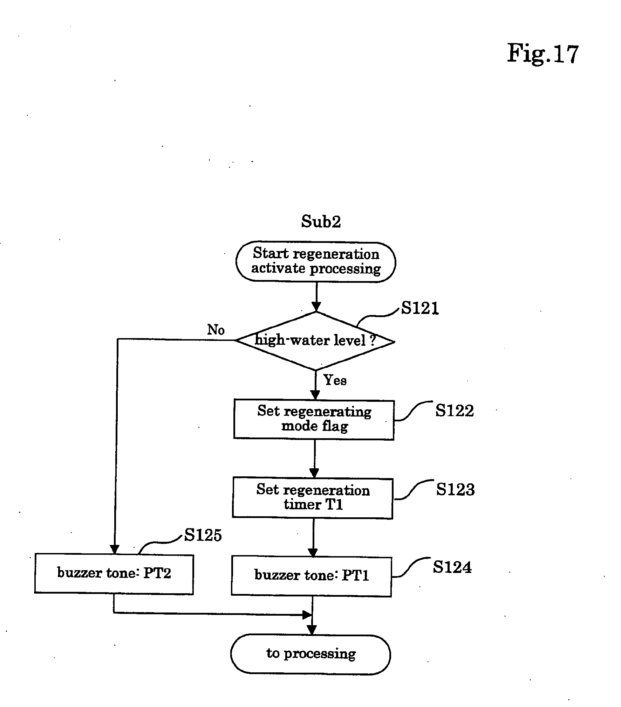

Next, regeneration activate processing of the Sub2 is described based on the flowchart shown in FIG. 17.

Upon start of regeneration activate processing, the microprocessor 73 carries out high-water level determination of whether or not the water level in the water storage tank 13 has exceeded a high-water level (S121). The purpose of high-water level determination is to confirm whether or not a prerequisite of the amount of to-be-electrolyzed raw water at least exceeding the high-water level is satisfied under consideration that accomplishing the end desire of regenerating a cathode-exchange membrane and a negative plate during positive polarity electrolysis is impossible unless that amount of to-be-electrolyzed raw water exists.

If the high-water level determination in S121 shows that the water level has exceeded the high-water level, the microprocessor 73 sets a regenerating mode flag indicating that the operating mode of the apparatus 11 is in regenerating mode (S122), sets , the regenerating required time (e.g., 5 min. in this embodiment) to a regeneration timer T1 constituted by a countdown timer, for example (S123), sounds a tone pattern 1 (PT1: 'pi', for example (sounds a single short tone)) to notify the user to the effect that the operating mode has been changed to the regenerating mode (S124), and then jumps to processing of the Sub4.

On the other hand, if the high-water level determination in S121 shows that the water level has not exceeded the high-water level, the microprocessor 73 makes the buzzer 87 sound a tone pattern 2 (PT2: 'pi pi pi', for example (intermittently sound three consecutive short tones)) to notify the user to the effect that the operating mode has not been changed to the generating mode (S125), and then jumps to processing of the Sub4.

### (System Operation -Sub3- Rinse Activate Processing)

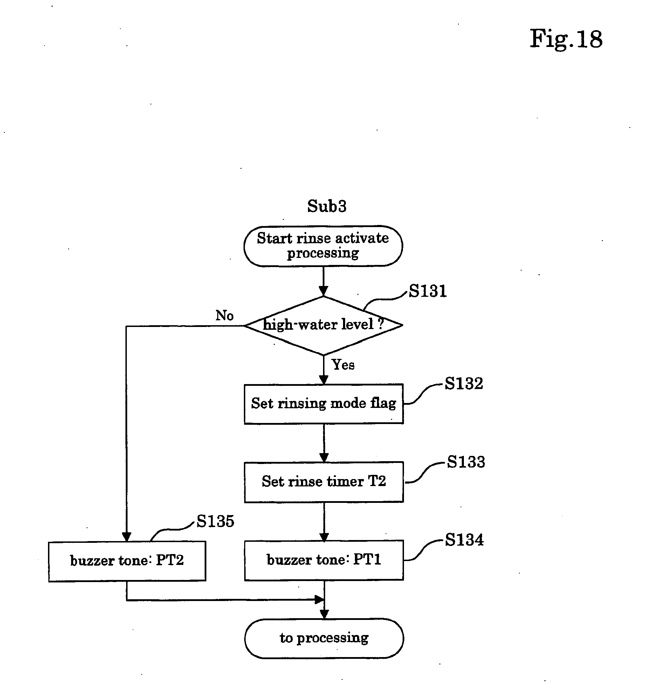

Next, rinse activate processing of the Sub3 is described based on the flowchart shown in FIG. 18.

Upon start of rinse activate processing, the microprocessor 73 carries out high-water level determination of whether or not the water level in the water storage tank 13 has exceeded the high-water level (S131). The purpose of high-water level determination is to confirm whether or not a prerequisite of the amount of to-be-electrolyzed raw water at least exceeding the high-water level is satisfied under consideration that accomplishing the end desire of disinfecting and rinsing wetted parts in the apparatus 11 is impossible unless that amount of to-be-electrolyzed raw water exists.

If the high-water level determination in S131 shows that the water level has exceeded the high-water level, the microprocessor 73 sets a rinsing mode flag indicating that the operating mode of the apparatus 11 is in the rinsing mode (S132), sets the time required (e.g., 10 min. in this embodiment) for disinfecting and rinsing the wetted parts in the apparatus 11 to a rinse timer T2 constituted by a countdown timer, for example (S133), makes the buzzer tone a tone pattern 1 (PT1: 'pi', for example (sound a single short tone)) to notify the user to the effect that the operating mode has been changed to the rinsing mode (S134), and then jumps to processing of the Sub4.

On the other hand, if the high-water level determination in S131 shows that the water level has not exceeded the high-water level, the microprocessor 73 makes the buzzer 87 sound a tone pattern 2 (PT2: 'pi pi pi', for example (intermittently sound three consecutive short tones)) to notify the user to the effect that the operating mode has not been changed to the rinsing mode (S135), and then jumps to processing of the Sub4.

### (System Operation -Sub 4- Processing- Generating Processing)

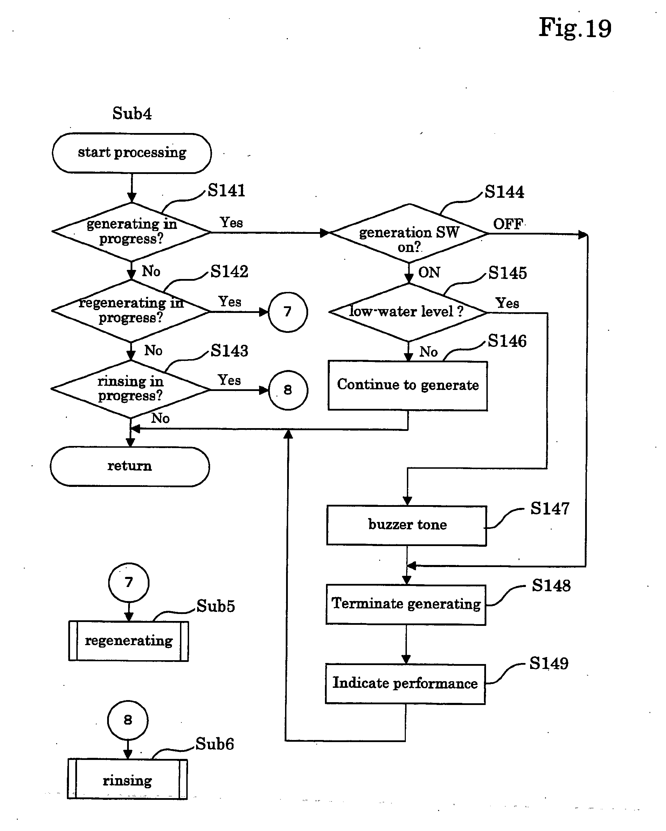

Next, processing of the Sub4 is described based on the flowchart shown in FIG. 19.

Upon start of processing, the microprocessor 73 carries out operating mode determination of whether either generating, regenerating, or rinsing is in progress based on the set status of the respective various mode flags (generating, regenerating, and rinsing) (S141, S142, S143).

If the operating mode determinations in S141, S 142, and S 143 shows that any one of the above-given operating modes is in progress, the microprocessor 73 carries out generating after S144 when it is determined that generating is in progress, regenerating when it is determined that regenerating is in progress (Sub5), and rinsing when it is determined that rinsing is in progress (Sub6). After execution of each subroutine program, processing returns to indicate processing (S107) of the main routine shown in FIG. 15.

On the other hand, if the operating mode determinations in S141, S142, and S143 show that none of the above-given operating modes are appropriate, the microprocessor 73 returns processing to indicate processing (S107) of the main routine shown in FIG. 15.

However, if the operating mode determination in S141 shows that generating is in progress, the microprocessor 73 carries out status determination of whether or not the generation SW 77 has been operated (S144).

If the switch input status determination in S144 shows that the generation SW 77 has been operated, the microprocessor 73 carries out low-water level determination of whether or not the water level in the water storage tank 13 has exceeded the low-water level (S 145), while if it is determined that the generation SW 77 has not been operated, the microprocessor 73 carries out generation terminating (S148).

If the low-water level determination in S145 shows that water level has exceeded the low-water level, the microprocessor 73 carries out processing for continuing operation in generating mode as the operating mode of the apparatus 11 (S145). After this operation, processing returns to indicate processing (S107) of the main routine shown in FIG. 15.

On the other hand, if the low-water level determination in S145 shows that the water level has not exceeded the low-water level, the microprocessor 73 makes the buzzer 87 sound a tone pattern 3 (PT3: 'pi-', for example (sound a single long tone)) to notify the user to the effect of an attention attracting status (insufficient amount of to-be-electrolyzed raw water) (S147), and then carries out generation terminating (S148). Once generating is terminated, performance indicate processing is carried out (S149) and then processing returns to indicate processing (S107) of the main routine shown in FIG. 15.

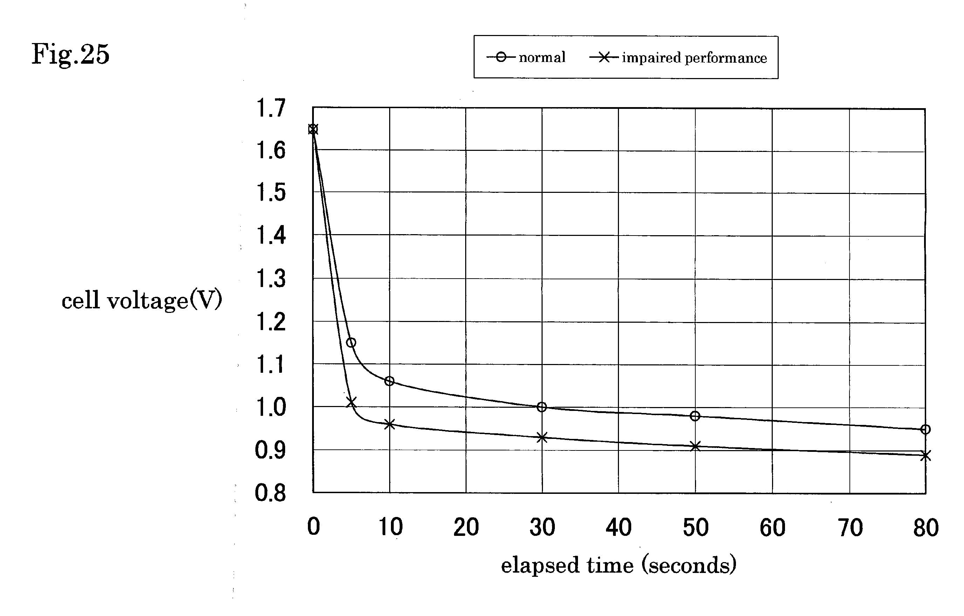

Here, performance indicate processing of S149 is processing for visually presenting to the user the status of the electrolytic cell 17, namely performance of the electrolyzed functional water just generated by varying illuminating duration and/ or brightness of the illumination LED101,-which-illuminates the-front of-the electrolytic cell 17 from the surrounding thereof, based on the cell voltage falling tendency after electrolysis is turned off. Introducing the background of this performance indicating technology, the inventers have found a certain relationship between the cell voltage falling tendency after electrolysis is turned off and the performance of the electrolyzed functional water just generated, and applying this development may allow rough indication of the performance of the electrolyzed functional water just generated be indicated. Here, this certain relationship means a relationship where cell voltage falling tendency after electrolysis is turned off is gradual (duration from 1.65V or cell voltage immediately after electrolysis is turned off falling to 1V is thirty seconds) when the electrolyzed functional water is in a normal state (hydrogen concentration is high), whereas cell voltage falling tendency after electrolysis is turned off is more sudden than the former (duration from 1.65V or cell voltage immediately after electrolysis is turned off falling to 1V is five seconds) when the electrolyzed functional water is in a performance impaired state (hydrogen concentration is low), as shown in the example of FIG. 25. Note that in the example shown in FIG. 25, a load of 100 ohms is employed as the discharging resistor 111. Furthermore, to easily carry out performance evaluation of the electrolyzed functional water (determine hydrogen concentration), of technologies filed and already disclosed by the applicants in addition to the above-described performance indicating function, a method of analyzing dissolved hydrogen concentration through oxidation-reduction titration of an oxidation-reduction pigment (e.g., methylene blue) disclosed in International Publication No. WO2003/002466 should be employed.

### (System Operation -Sub5- Regenerating)

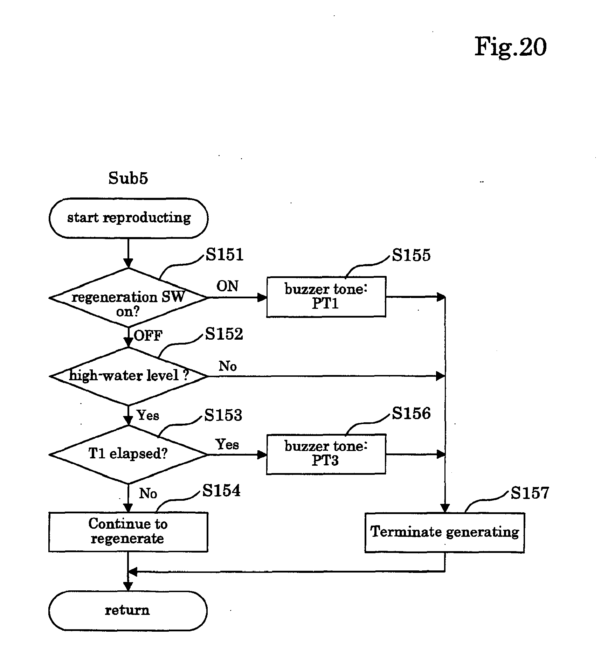

Next, regenerating in the Sub5 is described based on the flowchart shown in FIG. 20.

Upon start of regenerating, the microprocessor 73 carries out status determination of whether or not the regeneration SW 79 has been operated (S151).

If the switch operation input status determination in S151 shows that the regeneration SW 79 is not operating, the microprocessor 73 carries out high-water level determination of whether or not the water level in the water storage tank 13 has exceeded the high-water level (S152), while if it is determined that the regeneration SW 79 has been operated (the regeneration SW 79 has been operated while regeneration is in progress; such operating occurs when the user wants to manually terminate regeneration), buzzer tone: PT1 processing (S155) is carried out. In other words, in S155, the microprocessor 73 makes the buzzer 87 sound the tone pattern 1 (PT1: 'pi-', for example (sound a single long tone)) to notify the user to the effect of having accepted manual termination of regeneration (S155), and then carries out terminating of regeneration (S157). Once regenerating is terminated, processing returns to indicate processing (S107) of the main routine shown in FIG. 15.

If the high-water level determination of S152 shows that the water level has not exceeded the high-water level, the microprocessor 73 carries out the aforementioned regeneration terminating (S157) assuming that an unforeseen event such as a water leak has occurred, while if it is determined that the water level has exceeded the high-water level, the microprocessor 73 carries out regenerating time elapse determination of whether or not time required (e.g., 5 min. in this embodiment) for accomplishing regeneration of the cation-exchange membrane set to the regeneration timer T1 has elapsed (S153).

If the regenerating time elapse determination of S153 shows that the regenerating required time has elapsed, the microprocessor 73 carries out buzzer tone: PT3 processing (S156), while if it is determined that the regenerating time has not elapsed, the microprocessor 73 carries out processing for continuing processing in regenerating mode as the operating mode of the apparatus 11 (S154). Afterwards, processing returns to indicate processing (S107) of the main routine shown in FIG. 15. Note that in S156, the microprocessor 73 makes the buzzer 87 sound the tone pattern 3 (PT3: 'pi-', for example (sound a single long tone)) to notify the user to the effect of an attention attracting status (automatic termination of the regenerating mode) (S156), and then carries out the aforementioned regeneration terminating (S157).

### (System Operation -Sub6- Rinsing)

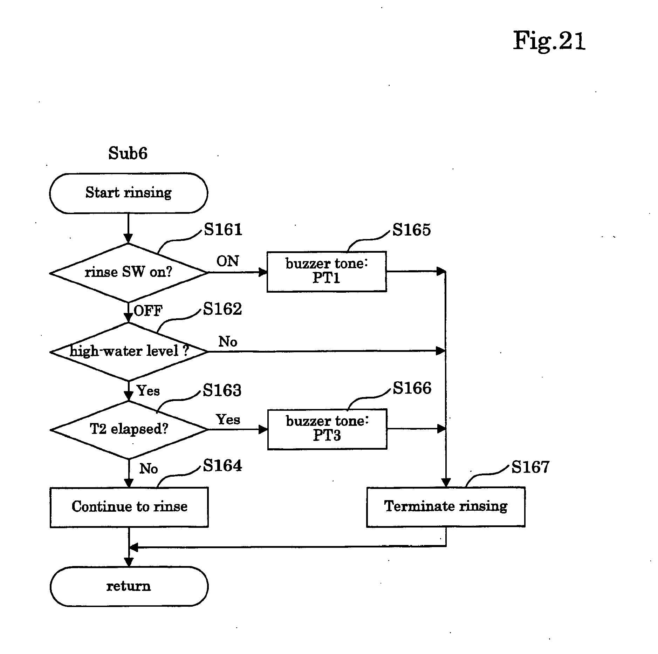

Next, rinsing in the Sub6 is described based on the flowchart shown in FIG. 21.

Upon start of rinsing, the microprocessor 73 carries out status determination of whether or not the rinse SW 81 has been operated (S161).

If the switch input status determination in S161 shows that the rinse SW 81 has not been operated, the microprocessor 73 carries out high-water level determination of whether or not the water level in the water storage tank 13 has exceeded the high-water level (S162), while if it is determined that the rinse SW 81 is operating (the rinse SW 81 is operating while rinsing is in progress; such operating occurs when the user wants to manually terminate rinsing), buzzer tone: PT1 processing (S165) is carried out. In other words, in S165, the microprocessor 73 makes the buzzer 87 sound the tone pattern 1 (PT1: 'pi-', for example (sound a single long tone)) to notify the user to the effect of having accepted manual termination of rinsing (S165), and then carries out rinse terminating (S157). Once rinsing is terminated, processing returns to indicate processing (S107) of the main routine shown in FIG. 15.

If the high-water level determination in S162 shows that the water level has not exceeded the high-water level, the microprocessor 73 carries out the aforementioned rinse terminating (S167) assuming that an unforeseen event such as a water leak has occurred, while if it is determined that the water level has exceeded the high-water level, the microprocessor 73 carries out rinsing time elapse determination of whether or not time required (e.g., 10 min. in this embodiment) for accomplishing disinfecting and rinsing of wetted parts in the apparatus 11 set to the rinse timer T2 has elapsed (S163).

If the rinsing time elapse determination in S163 shows that the rinsing time has elapsed, the microprocessor 73 carries out buzzer tone: PT3 processing (S166), while if it is determined that the rinsing required time has not elapsed, the microprocessor 73 carries out processing for continuing processing in the rinsing mode as the operating mode of the apparatus 11 (S164). Afterwards, processing returns to indicate processing (S107) of the main routine shown in FIG. 15. Note that in S166, the microprocessor 73 makes the buzzer 87 sound the tone pattern 3 (PT3: 'pi-', for example (sound a single long tone)) to notify the user to the effect of an attention attracting status (automatic termination of the rinsing mode) (S166), and then carries out the aforementioned rinse terminating (S167).

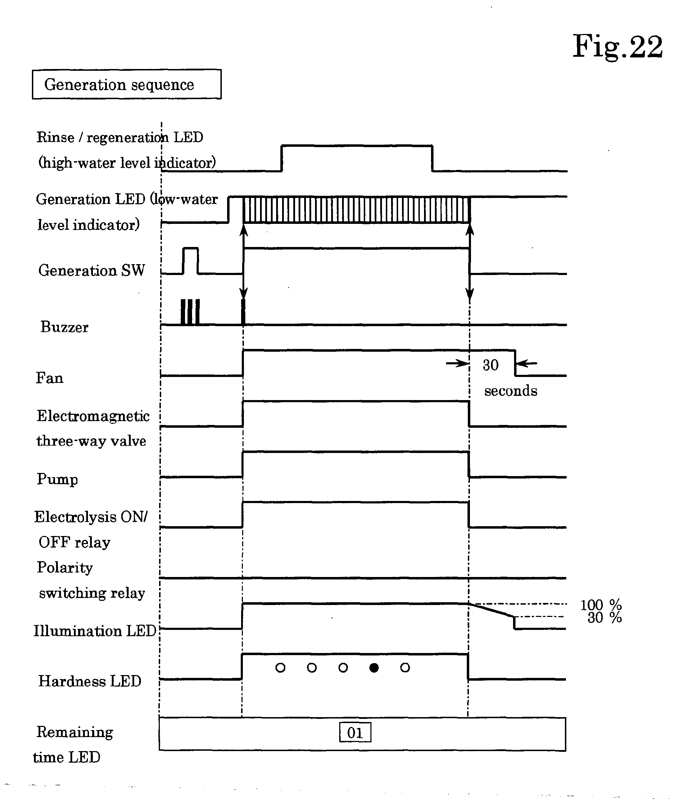

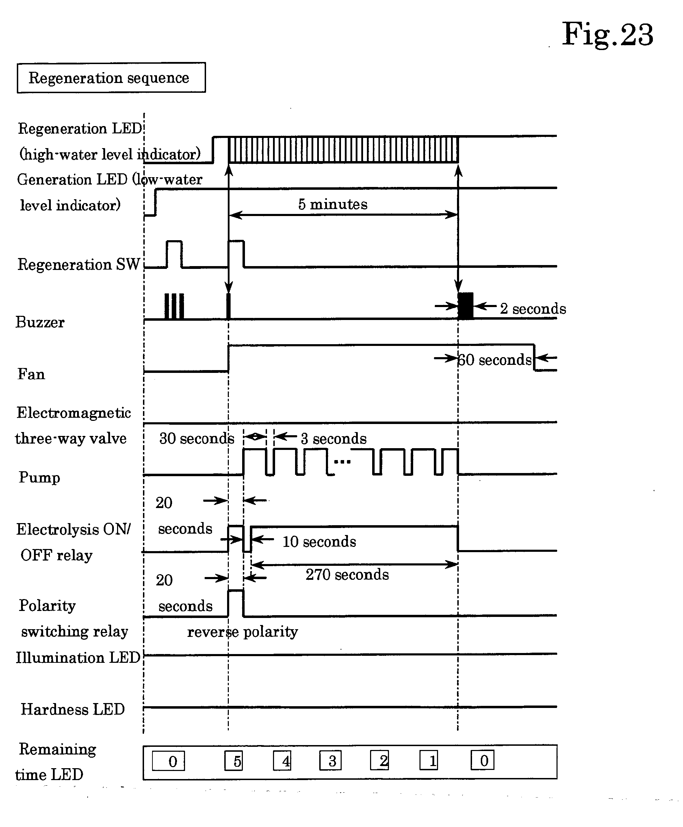

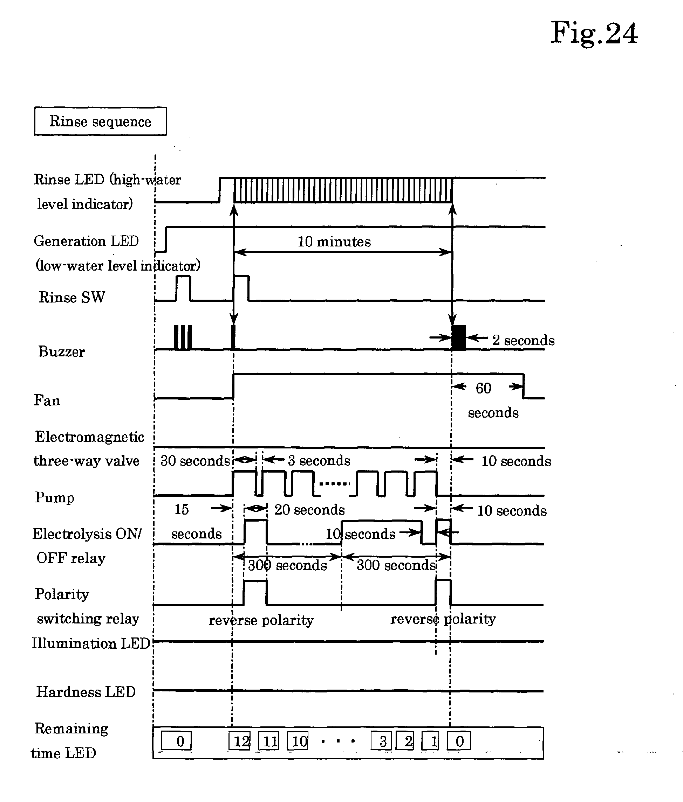

Usage and operation of the electrolyzed functional water generating apparatus 11 structured in this manner are described divided into an electrolyzed functional water generating process, a regenerating process for the cation-exchange membranes 59 and 60, and a rinsing process for the electrode plates (negative plates) while referencing the appended drawings. A timing chart for the generating process is given in FIG. 22, a timing chart for the regenerating process is given in FIG. 23, and a timing chart for the rinsing process is given in FIG. 24.

### (Generating Process)

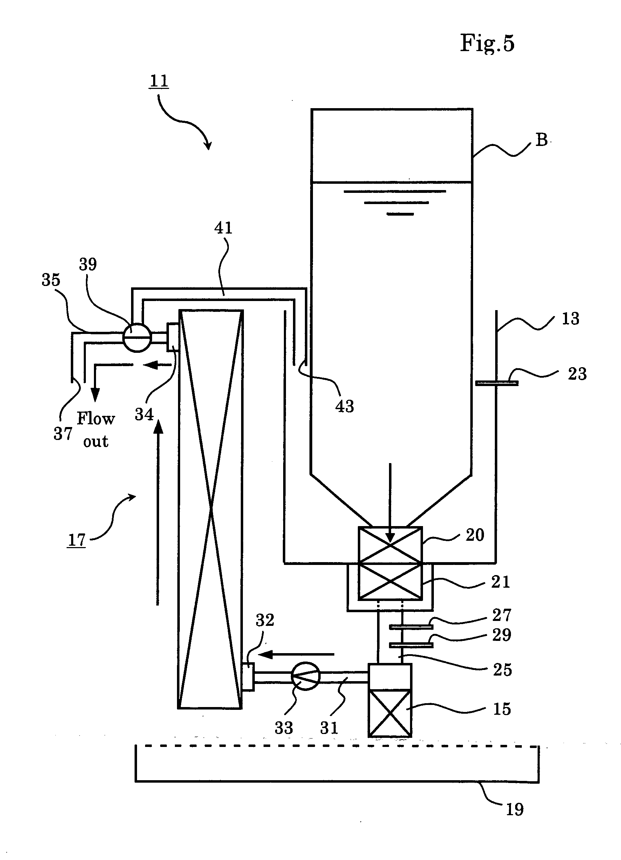

To generate electrolyzed functional water using the electrolyzed functional water generating apparatus 11, as shown with the flow of the generating process of FIG. 5, to begin with, the cap of (PET) bottled water such as commercially available mineral water, for example, is opened and an attachment 20 is then fixed to the opening thereof. Next, the bottle B is turned upside down and the attachment 20 is inserted towards a bottle connector 21 positioned at the lower portion of the water storage tank 13 to connect the attachment 20 and the bottle connector 21, and thereby preparing to carry out the generating process. At this time, if the user manipulates the generation SW 77 to input, operation begins in the generating mode, to-be-electrolyzed raw water in the bottle B is fed into the electrolytic cell 17 when the pump 15 is driven, and electrolysis processing of the to-be-electrolyzed raw water in the electrolytic cell 17 is carried out.

In such generating process, how the various switches, the various LEDs, and the various actuators such as the pump 15, the fan 85, the electromagnetic three-way valve 39, the buzzer 87, and the relays 103 and 105 operate by association is described in detail while referencing FIG. 22.

To begin with, in the case where the high-water level is not exceeded (the generation LED 91 is not illuminated in this case), generating does not start even if the user manipulates the generation SW 77 to input. At this time, the buzzer 87 sounds the tone pattern 2 (PT2: 'pi pi pi', for example (intermittently sounds three consecutive short tones)) to warn the user that the operating mode could not change to the generating mode.

Meanwhile, in the case where the low-water level is exceeded (the generation LED 91 is illuminated in this case), generating starts when the user manipulates the generation SW 77 to input. At this time, the buzzer 87 sounds the tone pattern 1 (PT1: 'pi', for example (sounds a single short tone)) to notify the user that the operating mode has changed to the generating mode. Generating continues only while the user keeps pressing the generation SW 77 under the condition of the amount of water exceeding the low-water level. When the water level falls below the low-water level while the user continues to press the generation SW 77, the buzzer 87 sounds the tone pattern 3 (PT3: 'pi-', for example (sounds a single long tone)) to notify the user to the effect of an attention attracting status (insufficient amount of to-be-electrolyzed raw water).

Operations of the various LEDs and the various actuators such as the pump 15, the fan 85, the electromagnetic three-way valve 39, the buzzer 87, and the relays 103 and 15 while generating is in progress are described forthwith. The generation LED 91 blinks to notify the user to the effect that operation is in progress in the generating mode. The fan 85 continues to blow air while generating is in progress and until thirty seconds have elapsed after termination thereof. The electromagnetic three-way valve 39 is switched-over to the outflow side. The pump 15 is driven to discharge the to-be-electrolyzed raw water. The electrolysis ON/ OFF relay 105 is biased to the positive electrode side. The illumination LED 101 continues illuminating by being applied with a specified power (normal mode) while generating is in progress. On the other hand, after generating is turned off, the illumination LED 101 illuminates by being controlled to vary illuminating duration and/ or brightness based on the cell voltage falling tendency after electrolysis is terminated. Furthermore, the raw water hardness LED 97 indicates hardness, which is calculated by the microprocessor 73 based on EC values of the to-be-electrolyzed raw water detected by the EC input units (EC sensors) 27 and 29, by varying the blinking rate thereof.

Next, properties and applications of the electrolyzed functional water are described with focus on electrode reactions in the generating process. If to-be-electrolyzed raw water is subjected to electrolysis with a positive polarity in a state where the to-be-electrolyzed raw water is supplied to the electrolytic chamber 55, an electrochemical reaction represented by the reaction formula

4H₂O+4e⁻→2H₂↑4OH⁻

occurs on the surfaces of the cathodes 63 and 64 provided in the electrolytic chamber 55, generating hydrogen and hydroxide ions, and as a result of the generated hydrogen dissolving in the water, electrolyzed hydrogen-dissolved water is generated. Meanwhile, an electrochemical reaction represented by the reaction formula:

2H₂O→O₂↑4H⁺+4e⁻

occurs on the surfaces of the anodes 61 and 62 provided in contact with the cation-exchange membranes 59 and 60, or more specifically, between the anode 61 and the cation-exchange membrane 59 and also between the anode 62 and the cation-exchange membrane 60, generating hydroxide and hydrogen ions.

Since all of the abundant hydrogen ions generated in this manner pass through the cation-exchange membranes 59 and 60 and are reduced to water molecules through an equivalent weight reaction occurring with the hydroxide ions generated on the surfaces of the cathodes 63 and 64, the pH of the generated electrolyzed functional water in the electrolytic chamber 55 is maintained at almost the same pH as the raw water. In other words, electrolyzed hydrogen-saturated water (electrolyzed functional water) in which abundant minute hydrogen bubbles generated through electrolysis are dissolved is provided almost maintaining the pH of the raw water. The electrolyzed functional water generated in this manner is retrieved from the outlet 37 and is used for drinking, for example.

### (Regenerating process)

When electrolyzing performance of the electrolytic cell 17 and performance of the electrolyzed functional water are impaired, the regenerating process is carried out for the purpose of descaling the third and fourth electrode plates 63 and 64 used as cathodes during positive polarity electrolysis, and regeneration of the cation-exchange membranes 59 and 60. Note that with the present invention, the process for regenerating the cation-exchange membranes 59 and 60 is called a membrane regenerating process (synonymous to the membrane regenerating process referred to in the appended claims), and is distinguished from the above-given regenerating process for regenerating the electrode plates and the cation-exchange membranes.

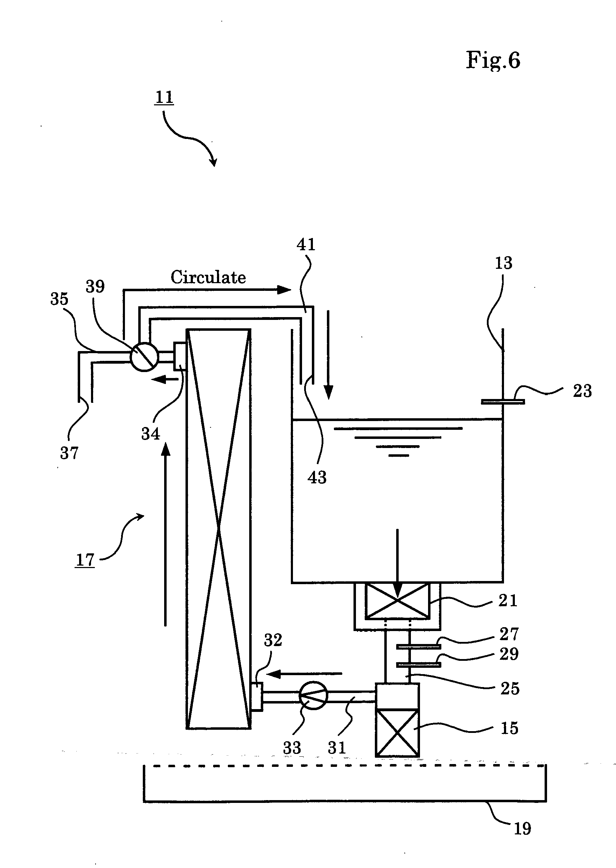

To carry out the regenerating process, as shown in FIG. 6, to begin with, for example, tap water, preferably soft water, more preferably deionized water is poured in the water storage tank 13 until exceeding the high-water level, and thereby preparing to carry out the regenerating process. At this time, if the user manipulates the regeneration SW 79 to input, operation begins in the regenerating mode, to-be-electrolyzed raw water in the water storage tank 13 is fed into the electrolytic cell 17 by driving the pump 15 in a predetermined sequence, and electrolysis of the to-be-electrolyzed raw water in the electrolytic cell 17 is carried out. Here, in the membrane regenerating process, it is important to carry out electrolysis under an electrolysis requirement of exceeding a certain critical current density (e.g., 2A/dm²) or the lower limit in order to desorb cations adsorbed into the cation-exchange membranes 59 and 60.

How various switches, various LEDs, and various actuators such as the pump 15, the fan 85, the electromagnetic three-way valve 39, the buzzer 87, and the relays 103 and 105 operate by association in such regenerating process is described in detail while referencing FIG. 23.

To begin with, in the case where the high-water level is not exceeded (the regeneration LED 93 is not illuminated in this case), regenerating does not start even if the user manipulates the regeneration SW 79 to input. At this time, the buzzer 87 sounds the tone pattern 2 (PT2: 'pi pi pi', for example (intermittently sounds three consecutive short tones)) to warn the user that the operating mode could not change to the regenerating mode.

Meanwhile, in the case where the high-water level is exceeded (the regeneration LED 93 is illuminated in this case), regenerating starts when the user manipulates the regeneration SW 79 to input. At this time, the buzzer 87 sounds the tone pattern 1 (PT1: 'pi', for example (sounds a single short tone)) to notify the user that the operating mode has changed to the regenerating mode. Regenerating continues until a preset regenerating time (e.g., 5 min. in this embodiment) has elapsed or the user manipulates the regeneration SW 79 to input (manually terminates regeneration) under the condition that the high-water level is exceeded. While regenerating is in progress, when an unforeseen event such as a water leak occurs and the water level falls below the high-water level, the regenerating time has elapsed, or there has been an input from the regeneration SW 79, the buzzer 87 sounds the tone pattern 3 (PT3: 'pi-', for example (sounds a single long tone)) to notify the user to the effect of an attention attracting status (termination of regenerating) and regeneration is then terminated.

Operations of the various LEDs and the various actuators such as the pump 15, the fan 85, the electromagnetic three-way valve 39, the buzzer 87, and the relays 103 and 105 while regeneration operating is in progress are described forthwith. The regeneration LED 93 blinks to notify the user to the effect that operation is in progress in the regenerating mode. The fan 85 continues to blow air while regenerating is in progress and until sixty seconds have elapsed after termination thereof. The electromagnetic three-way valve 39 is switched-over to a circulation side. The pump 15 stops until twenty seconds have elapsed immediately after regenerating has started. On the other hand, after those twenty seconds thereafter has elapsed (remaining time is 280 seconds), it intermittently drives (drive thirty seconds and rest three seconds) repeatedly to intermittently discharge the to-be-electrolyzed raw water. The electrolysis ON/ OFF relay 105 is biased to the reverse polarity electrolysis side (descale the negative plates 63 and 64 during positive polarity electrolysis) until twenty seconds have elapsed immediately after regenerating has started, and then after a ten-second duration of no electrolysis, it is biased to the positive polarity electrolysis side for only 270 seconds (regeneration of the cation-exchange membranes 59 and 60.) The polarity switching relay 103 is biased to the reverse polarity electrolysis side until twenty seconds have elapsed immediately after regenerating has started. Here, observing the timing chart for the electrolysis ON/ OFF relay 105 and the polarity switching relay 103, during the duration until twenty seconds have elapsed immediately after regenerating has started, reverse electrolysis is conducted while the pump 15 is not driven. This is for the purpose of suppressing the amount of hardness components adsorbed in the cation-exchange membranes 59 and 60. This is because if a reverse descaling process is carried out while driving the pump 15 using water containing hardness components such as tap water as water to be regenerated, adsorption of the hardness components in the cation-exchange membranes 59 and 60 accelerates as a result of the cation-exchange membranes 59 and 60 being continuously exposed to cations successively supplied thereto. Then, the remaining time LED 99 counts down and displays the remaining time until the automatic regenerating process is complete.

Next, action mechanism of the membrane regenerating process (same with the generating process) is described while referencing FIGS. 7 through 10 focusing on behaviors of materials in the electrolytic chamber 55 by categorizing them into categories based on whether electrolysis is conducted or not, and categories in pH of electrolyzed water that is acidic, alkaline, or neutral.

FIGS. 7 through 10 are simplified explanatory diagrams of just the left half of the electrolytic chamber 55 focusing on behaviors of the materials therein.

To begin with, a case of no electrolysis is described while referencing FIG. 7. If the apparatus 11 is left in an electrolysis off state, adsorption of cations such as calcium ions or magnesium ions existing in the residual water in the electrolytic chamber 55 to the membrane 60 gradually progresses at the same time that hydrogen ions are discharged due to substitution by the cations. At this time, focusing on characteristics of the residual water in the electrolytic chamber 55, the hardness thereof reduces and the pH thereof becomes more acidic. The adsorption progression rate of the cations to the membrane 60 gradually slows down as the mutual relationship between parameters such as hardness of the residual water in the electrolytic chamber 55, the adsorption rate of cations to the membrane 60, and pH of the residual water approaches a state of equilibrium, and the progression of adsorption may stop at the point when a state of equilibrium is achieved.

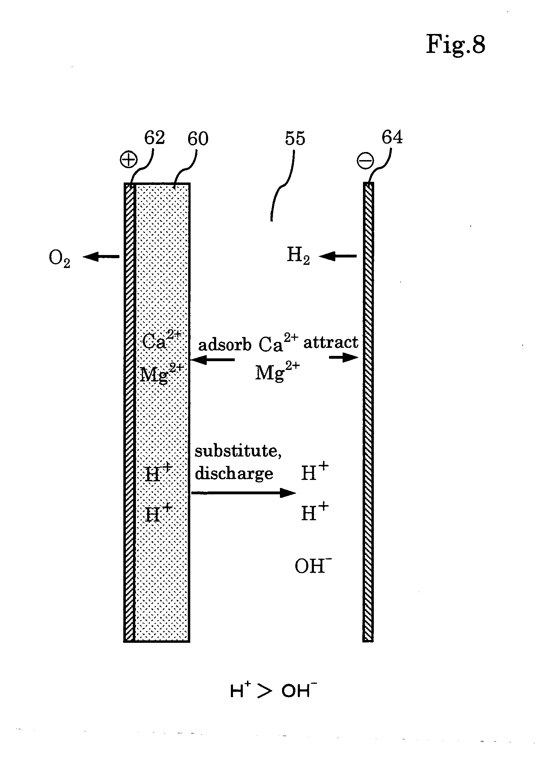

Next, a case of positive polarity electrolysis and an acidic pH of the electrolyzed water is described while referencing FIG. 8. In this case, since the adsorption progression rate of the cations to the membrane 60 tends to increase (tends to accumulate), adsorption of the cations existing within the water in the electrolytic chamber 55 to the membrane 60 increases at the same time that the hydrogen ions are discharged due to substitution by the cations, and supply of hydrogen ions generated at the anode to the water in the electrolytic chamber 55 by permeating the membrane gradually progresses. At this time, focusing on characteristics of the water in the electrolytic chamber 55, the hardness thereof reduces and the pH thereof becomes more acidic, as with the example of FIG. 7. As an applicable example, there may be a case where electrolysis is conducted under an electrolysis requirement not satisfying the critical current density in a state where adsorption of the cations to the membrane 60 is not progressing much.

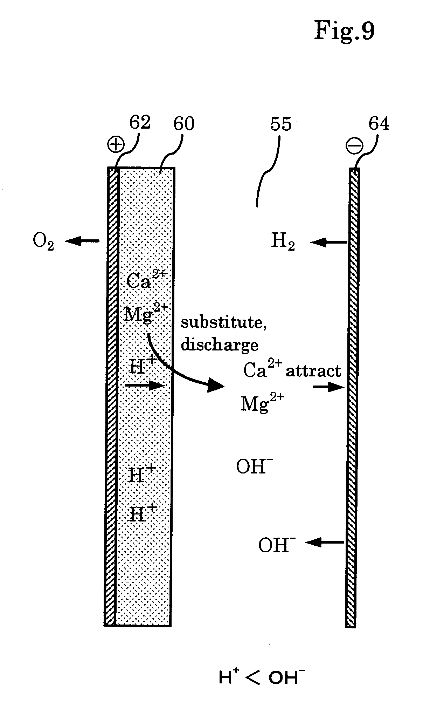

Next, a case of positive polarity electrolysis with an alkaline pH of the electrolyzed water is described while referencing FIG. 9. In this case, since the adsorption progression rate of the cations to the membrane 60 tends to decrease (tends to discharge), discharge of the cations accumulated in the membrane 60 gradually progresses due to substitution by the hydrogen ions. At this time, focusing on characteristics of the water in the electrolytic chamber 55, the hardness thereof increases and the pH thereof becomes more alkaline. As an applicable example, there may be a case where electrolysis is conducted under an electrolysis requirement exceeding the critical current density in a state where adsorption of the cations to the membrane 60 is excessive.

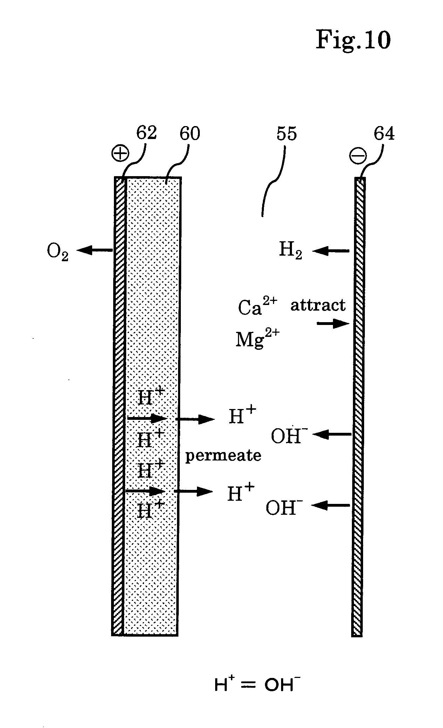

Next, a case of positive polarity electrolysis having a neutral pH of the electrolyzed water is described while referencing FIG. 10. In this case, since the adsorption progression rate of the cations to the membrane 60 is in a state of equilibrium (tends to be neutral), and since all of the hydrogen ions generated at the anode pass through the cation-exchange membrane 60 and are reduced to water molecules through an equivalent weight reaction occurring with the hydroxide ions generated on the surface of the cathode 64, the pH of the generated electrolyzed functional water in the electrolytic chamber 55 is maintained at almost the same pH as the raw water. As an applicable example, there may be a case where electrolysis is conducted under an electrolysis requirement exceeding the critical current density in a state where the membrane regeneration level is ideal.

### (Rinsing Process)

When the apparatus 11 is not used for a relatively long time such as a week, a rinsing process is carried out for the purpose of disinfection and rinsing of wetted parts in the apparatus 11, regeneration of the cation-exchange membranes 59 and 60, and descaling of the third and fourth negative plates 63 and 64 during positive polarity electrolysis. Note that with the present invention, the process for descaling the negative plates 63 and 64 during positive polarity electrolysis is called a reverse descaling process (synonymous to the reverse descaling process referred to in the appended claims), and is distinguished from the above-given rinsing process for regenerating the wetted parts and the cation-exchange membranes in the apparatus 11 and rinsing the electrode plates.

To carry out the rinsing process, as shown in FIG. 6 (since flow of water in the rinsing process is the same as that of the regenerating process, the diagrams showing the flow of water in the regenerating process are used in common), to begin with, for example, tap water, preferably soft water, more preferably deionized water is poured in the water storage tank 13 until exceeding the high-water level, and thereby preparing to carry out the rinsing process. At this time, if the user manipulates the rinse SW 81 to input, operation begins in the rinse mode, to-be-electrolyzed raw water in the water storage tank 13 is fed into the electrolytic cell 17 by driving the pump 15 in a predetermined sequence, and electrolysis of the to-be-electrolyzed raw water in the electrolytic cell 17 is carried out.

How various switches, various LEDs, and various actuators such as the pump 15, the fan 85, the electromagnetic three-way valve 39, the buzzer 87, and the relays 103 and 105 operate by association in such rinsing process is described in detail while referencing FIG. 24.

To begin with, in the case where the high-water level is not exceeded (the rinse LED 95 is not illuminated in this case), rinsing does not start even if the user manipulates the rinse SW 81 to input. At this time, the buzzer 87 sounds the tone pattern 2 (PT2: 'pi pi pi', for example (intermittently sounds three consecutive short tones)) to warn the user that the operating mode could not change to the rinsing mode.

Meanwhile, in the case where the high-water level is exceeded (the rinse LED 95 is illuminated in this case), automatic rinsing starts when the user manipulates the rinse SW 81 to input. At this time, the buzzer 87 sounds the tone pattern 1 (PT1: 'pi', for example (sounds a single short tone)) to notify the user that the operating mode has changed to the rinsing mode. Rinsing continues until a preset rinsing time (e.g., 10 min. in this embodiment) has elapsed or the user manipulates the rinse SW 81 to input (manual rinse operating termination) under the condition that the high-water level is exceeded. While rinsing is in progress, when an unforeseen event such as a water leak occurs and the water level falls below the high-water level, the rinsing time has elapsed, or there is an input from the rinse SW 81, the buzzer 87 sounds the tone pattern 3 (PT3: 'pi-', for example (sounds a single long tone)) to notify the user to the effect of an attention attracting status (termination of rinsing), and rinsing is then terminated.

Operations of the various LEDs and the various actuators such as the pump 15, the fan 85, the electromagnetic three-way valve 39, the buzzer 87, and the relays 103 and 15 while rinsing is in progress are described forthwith. The rinse LED 95 blinks to notify the user to the effect that operation is in progress in the rinsing mode. The fan 85 continues to blow air while rinsing is in progress and until sixty seconds have elapsed after termination thereof. The electromagnetic three-way valve 39 is switched-over to the circulation side. The pump 15 intermittently discharges the to-be-electrolyzed raw water by repeating being intermittently driven (drive thirty seconds and rest three seconds) until 590 seconds have elapsed immediately after rinsing has started, and stops for the remaining ten seconds. The electrolysis ON/ OFF relay 105 is biased to the reverse polarity electrolysis side until twenty seconds have elapsed from the point when fifteen seconds have elapsed after rinsing has started. After this, a 265-second duration of no electrolysis follows. Next, the electrolysis ON/ OFF relay 105 is biased to the reverse polarity electrolysis side for only 280 seconds (regeneration of the cation-exchange membranes 59 and 60). After this, a ten-second duration of no electrolysis follows. Next, the electrolysis ON/ OFF relay 105 is biased to the reverse polarity electrolysis side for only ten seconds. Note that the reason why fifteen seconds of delay time is provided before switching the electrolysis ON/ OFF relay 105 ON immediately after rinsing has started is for making the sodium chloride concentration in the to-be-electrolyzed raw water uniform by stirring that solution when using a sodium chloride solution, for example, as the to-be-electrolyzed raw water for rinsing. The polarity switching relay 103 is biased to the reverse polarity electrolysis side until twenty seconds have elapsed from the point when fifteen seconds have elapsed after rinsing has started and just for ten seconds from the point when 590 seconds have elapsed after rinsing has started. Here, of the reverse electrolysis performed twice, the former is mainly carried out for converging the pH of the rinsing water into a range (pH 4 to 6) allowing increase in sterilizing capability of hypochlorous acid, and the latter is mainly for descaling the third and fourth electrode plates 63 and 64, which are used as cathodes during positive polarity electrolysis. Then, the remaining time LED 99 counts down and displays the remaining time until the automatic rinsing process is complete.

Next, the developing mechanism of the scale adhesion problem, and the action mechanism of the rinsing process for resolving such a problem are described while referencing FIGS. 11 and 12 with focus on the behaviors of the materials in the electrolytic chamber 55.

FIGS. 11 and 12 are simplified explanatory diagrams of just the left half of the electrolytic chamber 55 focusing on behaviors of the materials therein.

To begin with, the developing mechanism of the scale adhesion problem is described while referencing FIG. 11. When operating in the generating process, for example, continues for a long time, as with the example of FIG. 10, electrolyzed hydrogen-saturated water (electrolyzed functional water) in which abundant minute hydrogen bubbles generated through electrolysis are dissolved is provided almost maintaining the pH of the raw water as is. However, since the calcium ions and magnesium ions existing within the water in the electrolytic chamber 55 react with the hydroxide ions on the surface of the cathode 64, calcium hydroxide and magnesium hydroxide precipitate on that surface. Such scale adhesion on the surface of the cathode 64 causes deterioration of the electrolysis efficiency.

At this point, in order to resolve this scale adhesion problem, the present invention employs the rinsing process in which a DC voltage from the DC power source 67 is applied in a reverse direction between an anode or the electrode plate 64 provided inside the electrolytic chamber 55 and a cathode or the electrode plate 62 provided outside the electrolytic chamber 55.

As shown in FIG. 12, when the reverse descaling process is carried out, the adsorption progression rate of the cations to the membrane 60 increases and discharge of hydrogen ions progresses due to substitution by the cations since the electrode plate 63 provided in contact with the cation-exchange membrane 60 is the cathode. In addition, since the electrode plate 64 in the electrolytic chamber 55 is the anode, supply of the hydrogen ions generated on the surface of this anode 64 to the water in the electrolytic chamber 55 gradually progresses. At this time, focusing on characteristics of the water in the electrolytic chamber 55, the hardness thereof decreases and the pH thereof becomes more acidic. Note that the hydroxide ions generated between the cathode 62 and the membrane 60 cannot pass through the cation-exchange membrane 60, accumulating in the vicinity of the cathode 62. Furthermore, in the rinsing process, if water containing chlorine ions is employed as the to-be-electrolyzed raw water, or chlorine ions are aggressively supplied by dissolving a chloride such as sodium chloride or potassium chloride in the to-be-electrolyzed raw water, hypochlorous acidic water with strong sterilizing capability may be generated on the surface of the anode 64 by reducing the chlorine ions into gaseous chlorine and dissolving it in the slightly acidic (e.g., pH of approximately 4 to 6) water in the electrolytic chamber 55. Circulating the hypochlorous acidic water generated in this manner to all parts of the water flow path in the apparatus completes disinfection and rinsing thereof.

Next, in the membrane regenerating process, the following testing is carried out for the purpose of examining how an appropriate critical current density changes when the hardness of the to-be-electrolyzed raw water is varied.

The following three types of test water differing in hardness are prepared by using 'evian' (registered trademark of S.A. des Eaux Minerales d' Evian), which is supplied in Japan through Calpis Itochu Mineral Water Co., Ltd., as reference water and appropriately diluting it with ion-exchanged water. Note that hardness adjustment of the test water can be easily carried out by measuring electric conductivity. In addition, the following total hardness and Ca hardness are actual measured values using a measuring kit.
(1) Test water 1: electric conductivity: 15 mS/m; total hardness: 80 ppm; Ca hardness: 55 ppm
(2) Test water 2: electric conductivity: 36 mS/m; total hardness: 195 ppm; Ca hardness: 130 ppm
(3) Test water 3: electric conductivity: 53 mS/m; total hardness: 295 ppm; Ca hardness: 200 ppm

As preparation for testing, one set of the regenerating process is carried out using ion-exchanged water to initialize (erase past electrolyzed functional water generation events and return the electrolytic cell to an initial state) the electrolytic cell 17. In other words, to begin with, reverse electrolysis is performed for twenty seconds with the pump 15 in an off state (without circulation), electrolysis is turned off and circulating is carried out for ten seconds, and then positive polarity electrolysis is performed for four minutes and thirty seconds while circulating with the pump 15 in an on state. After such regenerating process, the periphery of the water storage tank 13 is rinsed once with 800 cc of ion-exchanged water, and before beginning the testing, the periphery of the water storage tank 13 is rinsed once with 300 cc of a test water.

The testing procedure is pouring 800 cc of respective test waters in the water storage tank 13, and after carrying out circulating for one minute with electrolysis turned off, circulating is carried out for seven minutes through positive polarity electrolysis with six varied current densities (current density: 0/ 0.5/ 1/ 1.5/ 2/ 2.5 A/dm²). Having the time when circulating is concluded as a starting point while electrolysis is off, the pH of the electrolytic functional water being circulated is measured and recorded for every minute thereafter. Note that to initialize the electrolytic cell 17 at each time testing of one test water is concluded, a one set of the regenerating process, rinsing using ion-exchanged water, and rinsing using the next test water is carried out.

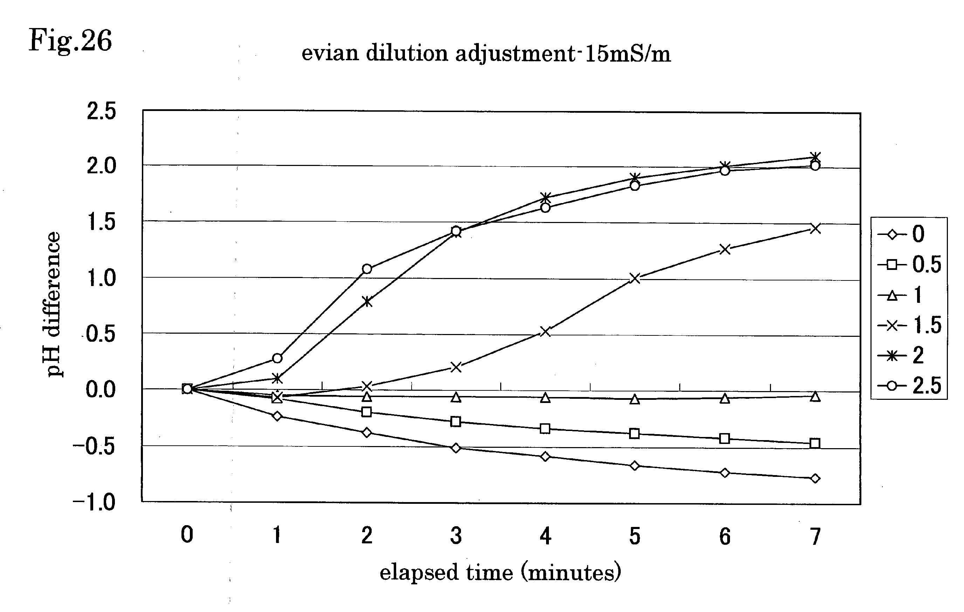

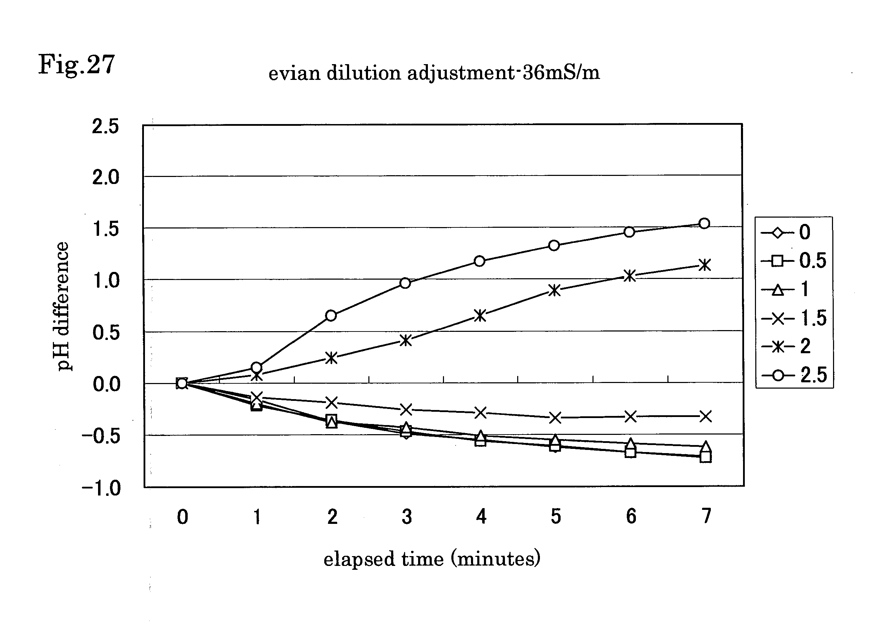

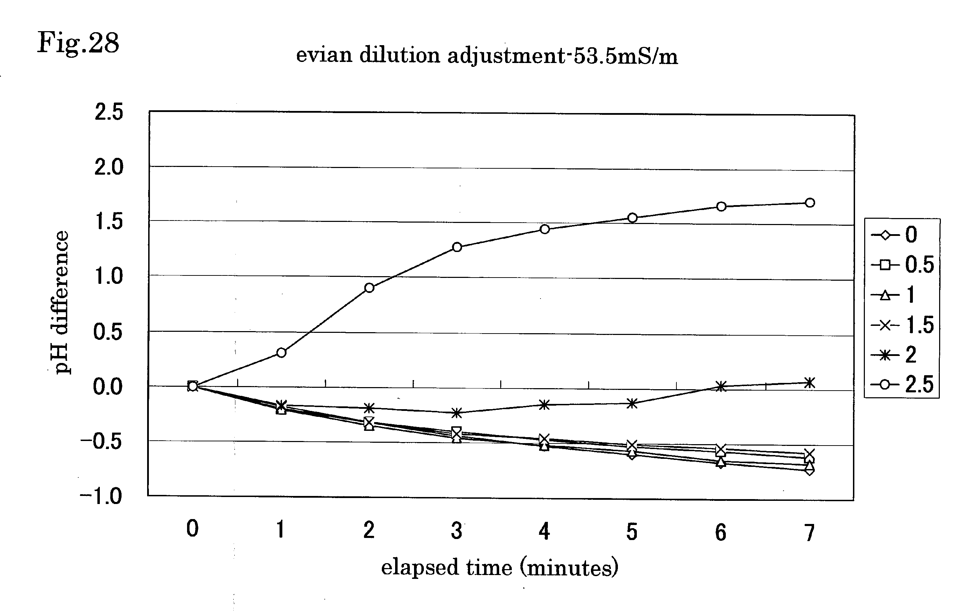

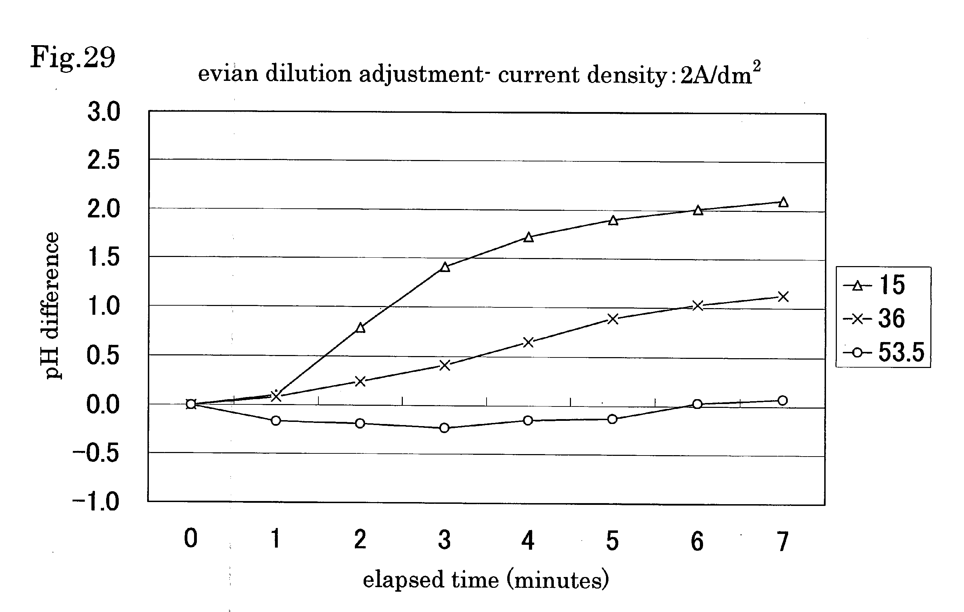

Results of carrying out testing in the manner are given in FIGS. 26 through 29. FIGS. 26 through 29 show graphs regarding characteristic changes over time of pH changing rates when the test water hardness is varied in three ways for describing that critical current density changes according to change in test water hardness.

It can be understood from the testing results of FIGS. 26 through 29 that critical current density tends to be a low value in the case where the to-be-electrolyzed raw water in which the cation-exchange membrane is immersed is soft water, while it tends to be a high value in the case where the membrane-immersing water is hard water. If 2 A/dm², for example, is employed as a critical current density or the lower limit in order to desorb cations adsorbed into the cation-exchange membranes 59 and 60 using the electrolytic cell 17 according to this embodiment, membrane regeneration is possible even with the test water 3 (total hardness: 295 ppm, Ca hardness: 200 ppm). More specifically, it demonstrates that employment of, for example, 2 A/dm² as the critical current density is sufficient as long as it is to-be-electrolyzed raw water with a total hardness of up to approximately 300 ppm.

## Claims

1. A performance maintaining method for an electrolyzed functional water generating apparatus, which comprises an electrolytic chamber to which to-be-electrolyzed raw water is supplied, at least one separating membrane which separates the inside of the electrolytic chamber from the outside thereof, at least a pair of electrode plates provided inside and outside the electrolytic chamber sandwiching the separating membrane, an electrolytic cell in which the electrode plate outside the electrolytic chamber is provided in contact with the separating membrane, and a DC power source that supplies a DC voltage between electrodes in the electrolytic cell; said method employing a cation-exchange membrane as the separating membrane and comprising:
regenerating a membrane by applying a DC voltage from the DC power source between a cathode or an electrode plate provided inside the electrolytic chamber and an anode or an electrode plate outside the electrolytic chamber in a forward direction in a state where the electrolytic chamber is supplied with to-be-electrolyzed raw water; wherein cations such as calcium ions or magnesium ions adsorbed into the cation-exchange membrane are desorbed while the to-be-electrolyzed raw water is subjected to electrolysis with a positive polarity so as to regenerate the membrane.

2. The performance maintaining method for an electrolyzed functional water generating apparatus set forth in claim 1, wherein a DC voltage from the direct current source is applied in a forward direction between both electrodes, and a current density of the anode is set to a value exceeding a critical current density or the lower limit in order to desorb cations adsorbed into the cation-exchange membrane.

3. The performance maintaining method for an electrolyzed functional water generating apparatus set forth in either claim 1 or 2, wherein a regeneration level of the cation-exchange membrane is grasped based on changes in PH over time of electrolyzed functional water resulting from subjecting the to-be-electrolyzed raw water to the electrolysis with a positive polarity.

4. The performance maintaining method for an electrolyzed functional water generating apparatus set forth in any of claims 1 through 3, further comprising a reverse descaling process of applying a DC voltage with a reverse polarity from the DC power source between the cathode or the electrode plate provided inside the electrolytic chamber and the anode or the electrode plate outside the electrolytic chamber in a state where to-be-electrolyzed raw water is supplied to the electrolytic chamber.

5. The performance maintaining method for an electrolyzed functional water generating apparatus set forth in claim 4, wherein once the reverse descaling process is carried out, the membrane regenerating process is carried out.

6. The performance maintaining method for an electrolyzed functional water generating apparatus set forth in any of claims 1 through 5, wherein the membrane regenerating process is intermittently carried out.

7. The performance maintaining method for an electrolyzed functional water generating apparatus set forth in any of claims 1 through 6, wherein soft water is used as the to-be-electrolyzed raw water supplied to the electrolytic chamber when regenerating the cation-exchange membrane while subjecting the to-be-electrolyzed raw water to the electrolysis with a positive polarity.

8. The performance maintaining method for an electrolyzed functional water generating apparatus set forth in any of claims 1 through 6, wherein deionized water is used as the to-be-electrolyzed raw water supplied to the electrolytic chamber when regenerating the cation-exchange membrane while subjecting the to-be-electrolyzed raw water to the electrolysis with a positive polarity.

9. The performance maintaining method for an electrolyzed functional water generating apparatus set forth in any of claims 1 through 8, wherein replacing the to-be-electrolyzed raw water supplied to the electrolytic chamber is carried out when regenerating the cation-exchange membrane while subjecting the to-be -electrolyzed raw water to the electrolysis with a positive polarity.

10. The performance maintaining method for an electrolyzed functional water generating apparatus set forth in claim 9, wherein replacing the to-be-electrolyzed raw water supplied to the electrolytic chamber is carried out by circulating the to-be-electrolyzed raw water.
